# EUROPEAN PATENT APPLICATION

(11) **EP 1 950 528 A2**
(43) Date of publication of application: **30.07.2008**
(21) Application number: 08001178.6
(22) Date of filing: 23.01.2008
(51) Int. Cl.: G01C 19/56, G01P 9/04, G01P 15/09, G01P 15/18, G01C 9/02

(54) **Motion sensor, accelerometer, inclination sensor, pressure sensor, and tactile controller**

(30) Priority: 24.01.2007 JP 2007014334
(71) Applicant: YAMAHA CORPORATION, Hamamatsu-shi Shizuoka-ken (JP); TOKYO INSTITUTE OF TECHNOLOGY, Tokyo (JP)
(72) Inventor: Hattori, Atsuo, Hamamatsu-shi Shizuoka-ken (JP); Nakamura, Kentaro, Yokohama-shi Kangawa-ken (JP)
(74) Representative: Wagner, Karl H.

(57) **Abstract**

A motion sensor may include, but is not limited to, a substrate, a beam, a weight, a piezoelectric film, and a first electrode. The beam is supported by the substrate. The beam is elastically deformable. The weight is attached to the beam. The piezoelectric film follows and extends along at least a part of the beam. The piezoelectric film may include, but is not limited to, an organic piezoelectric film. The first electrode is disposed on the piezoelectric film.

## Description

### BACKGROUND OF THE INVENTION

### Field of the Invention

The present invention generally relates to a motion sensor that can be used to detect a physical quantity such as acceleration, tilt, and angular velocity, an accelerometer using the motion sensor, an inclination sensor using the motion sensor, a pressure sensor using the motion sensor, and a tactile controller using the motion sensor.

Priority is claimed on Japanese Patent Application No. 2007-14334, filed January 24, 2007, the content of which is incorporated herein by reference.

### Description of the Related Art

All patents, patent applications, patent publications, scientific articles, and the like, which will hereinafter be cited or identified in the present application, will hereby be incorporated by reference in their entirety in order to describe more fully the state of the art to which the present invention pertains.

A motion sensor can be used to detect a physical quantity such as acceleration, tilt, and angular velocity. The motion sensor may be available to detect collision or crash of vehicles such as automobiles, to detect HDD drop, and to realize gaming machines. Typical types of the motion sensor may include, but are not limited to, a piezoresistance motion sensor, a capacitive motion sensor, and a piezoelectric motion sensor. The piezoresistance motion sensor and the capacitive motion sensor have been commercialized as a compact sensor using MEMS technology.

In general, the piezoresistance motion sensor is designed to sense the magnitude of variation of resistance that represents the magnitude of acceleration. The piezoresistance motion sensor is also designed to convert resistance into voltage and generate an output signal from the sensed magnitude of variation of resistance that represents the magnitude of acceleration. The piezoresistance motion sensor needs a circuit for converting resistance into voltage.

In general, the capacitive motion sensor is designed to sense the magnitude of variation of electrostatic capacitance that represents the magnitude of acceleration. The capacitive motion sensor is also designed to convert electrostatic capacitance into voltage and generate an output signal from the sensed magnitude of variation of electrostatic capacitance that represents the magnitude of acceleration. The capacitive motion sensor also needs a circuit for converting electrostatic capacitance into voltage.

The piezoelectric motion sensor is designed to sense the magnitude of acceleration and generate a voltage represents the sensed magnitude of acceleration. The piezoelectric motion sensor does not need any voltage-converting circuit.

Japanese Unexamined Patent Application, First Publication, No. 8-166243 discloses a two-axis angular velocity sensor as a piezoelectric angular velocity sensor. The two-axis angular velocity sensor has a metal plate as a beam and a piezoelectric ceramic with a plurality of electrode patterns. The piezoelectric ceramic is adhered by adhesive to the metal plate as a beam. The piezoelectric ceramic oscillates the beam and detects Coriolis force.

Japanese Unexamined Patent Application, First Publication, No. 8-201067 discloses another piezoelectric angular velocity sensor. Weight is attached to the center of a beam in order to improve the sensitivity.

Japanese Patent No. 3585980 discloses a three-axis angular velocity sensor as a piezoelectric angular velocity sensor that is designed to allow weight to show revolution motion to sense angular velocity on three-axes.

Japanese Unexamined Patent Application, First Publication, No. 2001-124562 discloses still another piezoelectric angular velocity sensor. A piezoelectric film is used as not only a piezoelectric sensor but also a beam. Weights are provided over and under the piezoelectric film to improve the signal-to-noise ratio of the sensor.

The above-described sensors have piezoelectric films made of ceramic. Application of mechanical impact to the ceramic piezoelectric film may deform the ceramic piezoelectric film such that the ceramic piezoelectric film is broken or cracked. The ceramic piezoelectric film is relatively lower in sensitivity than that is required. It is actually difficult to micro-process the piezoelectric ceramic. It is also difficult to improve the accuracy in alignment of the piezoelectric ceramic. It is further difficult to improve the accuracy in assembling the piezoelectric motion sensor.

In view of the above, it will be apparent to those skilled in the art from this disclosure that there exist needs for an improved motion senor, an accelerometer using the motion sensor, an inclination sensor using the motion sensor, a pressure sensor using the motion sensor, and a tactile controller using the motion sensor. This invention addresses this need in the art as well as other needs, which will become apparent to those skilled in the art from this disclosure.

### SUMMARY OF THE INVENTION

Accordingly, it is a primary object of the present invention to provide a motion sensor.

It is another object of the present invention to provide an accelerometer.

It is a further object of the present invention to provide an inclination sensor.

It is a still further object of the present invention to provide a pressure sensor.

It is yet a further object of the present invention to provide a tactile controller.

In accordance with a first aspect of the present invention, a motion sensor may include, but is not limited to, a substrate, a beam, a weight, a piezoelectric film, and a first electrode. The beam is supported by the substrate. The beam is elastically deformable. The weight is attached to the beam. The piezoelectric film follows and extends along at least a part of the beam. The piezoelectric film may include, but is not limited to, an organic piezoelectric film. The first electrode is disposed on the piezoelectric film.

Using an organic material for the piezoelectric film improves shock resistance of the motion sensor.

In some cases, the motion sensor may further include an insulating film over the beam; and a second electrode over the insulating film. The second electrode is eclectically separated by the insulating film from the beam. The second electrode extends under the piezoelectric film. The piezoelectric film is interposed between the first and second electrodes.

In other cases, the beam may be made of a conductive material, so that the beam performs as a second electrode, wherein the piezoelectric film is interposed between the first and second electrodes.

In typical case, the organic piezoelectric film may include polyurea. The piezoelectric film can be formed by a vapor deposition polymerization process as a dry process. This process may make it easy to reduce the thickness of the piezoelectric film. This process may also make it easy to control the thickness of the piezoelectric film. This process may also make it easy to define the shape or pattern of the piezoelectric film. This process may allow fabrication of the piezoelectric motion sensor of substantially the same size as the piezoresistance motion sensor or the capacitive motion sensor.

In some cases, the beam may be supported at one side thereof by the substrate so as to allow the motion sensor to perform as a single-axis accelerometer.

In other cases, the beam may be supported at both sides thereof by the substrate so as to allow the motion sensor to perform as a three-axis accelerometer.

In the case that the beam is supported at the both sides, the weight may be attached to the center area of the beam. The first electrode may include a plurality of electrode patterns which are disposed around the weight.

In accordance with a second aspect of the present invention, an accelerometer may include, but is not limited to, a motion sensor, and an output detecting unit. The motion sensor may include, but is not limited to, a substrate, a beam, a weight, a piezoelectric film, and a first electrode. The beam is supported at both sides thereof by the substrate. The beam is elastically deformable. The weight is attached to the center area of the beam. The piezoelectric film follows and extends along at least a part of the beam. The piezoelectric film may include or may be composed of an organic piezoelectric film. The first electrode is disposed on the piezoelectric film. The first electrode may include or may be composed of a plurality of electrode patterns which are disposed around the weight. The output detecting unit is connected to at least two of the electrode patterns. The output detecting unit detects the outputs from the at least two of the electrode patterns. The output detecting unit may include an acceleration detecting unit that detects acceleration based on the outputs that appear at the at least two of the electrode patterns when an acceleration is applied to the weight.

In accordance with a third aspect of the present invention, an inclination sensor may include, but is not limited to, a motion sensor, an excitation voltage applying unit, and an output detecting unit. The motion sensor may include, but is not limited to, a substrate, a beam, a weight, a piezoelectric film, and a first electrode. The beam is supported at both sides thereof by the substrate. The beam is elastically deformable. The weight is attached to the center area of the beam. The piezoelectric film follows and extends along at least a part of the beam. The piezoelectric film may include or may be composed of an organic piezoelectric film. The first electrode is disposed on the piezoelectric film. The first electrode may include or may be composed of a plurality of electrode patterns which are disposed around the weight. The excitation voltage applying unit is connected to at least two of the electrode patterns. The excitation voltage applying unit applies an excitation voltage to the at least two of the electrode patterns. The output detecting unit is connected to other electrode patterns. The output detecting unit detects the outputs from the other electrode patterns. The output detecting unit may include or may be composed of an inclination detecting unit that detects a tilt angle of the inclination sensor based on the change of a resonant frequency. The change of the resonant frequency is caused by an inclination of the weight.

In accordance with a fourth aspect of the present invention, a pressure sensor may include, but is not limited to, a motion sensor, an excitation voltage applying unit, and an output detecting unit. The motion sensor may include, but is not limited to, a substrate, a beam, a weight, a piezoelectric film, and a first electrode. The beam is supported at both sides thereof by the substrate. The beam is elastically deformable. The weight is attached to the center area of the beam. The piezoelectric film follows and extends along at least a part of the beam. The piezoelectric film may include or may be composed of an organic piezoelectric film. The first electrode is disposed on the piezoelectric film. The first electrode may include or may be composed of a plurality of electrode patterns which are disposed around the weight. The excitation voltage applying unit is connected to at least two of the electrode patterns. The excitation voltage applying unit applies an excitation voltage to the at least two of the electrode patterns. The output detecting unit is connected to other electrode patterns. The output detecting unit detects the outputs from the other electrode patterns. The output detecting unit may include or may be composed of a pressure detecting unit that detects an external pressure that is applied to the inclination sensor based on the change of a resonant frequency. The change of the resonant frequency is caused by applying an external pressure to the weight.

In accordance with a fifth aspect of the present invention, a tactile controller may include, but is not limited to, a tactile controller, an excitation voltage applying unit, an output detecting unit, and a tactile control unit. The motion sensor may include, but is not limited to, a substrate, a beam, a weight, a piezoelectric film, and a first electrode. The beam is supported at both sides thereof by the substrate. The beam is elastically deformable. The weight is attached to the center area of the beam. The piezoelectric film follows and extends along at least a part of the beam. The piezoelectric film may include or may be composed of an organic piezoelectric film. The first electrode is disposed on the piezoelectric film. The first electrode may include or may be composed of a plurality of electrode patterns which are disposed around the weight. The excitation voltage applying unit is connected to at least two of the electrode patterns. The excitation voltage applying unit applies an excitation voltage to the at least two of the electrode patterns. The output detecting unit is connected to other electrode patterns. The output detecting unit detects the outputs from the other electrode patterns. The tactile control unit is connected between the excitation voltage applying unit and the output detecting unit. The tactile control unit controls the excitation voltage based on the change of the resonant frequency is caused upon touching the weight.

These and other objects, features, aspects, and advantages of the present invention will become apparent to those skilled in the art from the following detailed descriptions taken in conjunction with the accompanying drawings, illustrating the embodiments of the present invention.

### BRIEF DESCRIPTION OF THE DRAWINGS

Referring now to the attached drawings which form a part of this original disclosure:
FIG. 1 is a schematic perspective view illustrating a motion sensor in accordance with a first embodiment of the present invention;
FIG. 2 is a cross sectional elevation view of the motion sensor, taken along an X-axis of FIG. 1;
FIG. 3 is a fragmentary cross sectional elevation view illustrating a step involved in a process for forming a motion sensor shown in FIGS. 1 and 2;
FIG. 4 is a fragmentary cross sectional elevation view illustrating a step, subsequent to the step of FIG. 3, involved in a process for forming a motion sensor shown in FIGS. 1 and 2;
FIG. 5 is a fragmentary cross sectional elevation view illustrating a step, subsequent to the step of FIG. 4, involved in the process for forming a motion sensor shown in FIGS. 1 and 2;
FIG. 6 is a fragmentary cross sectional elevation view illustrating a step, subsequent to the step of FIG. 5, involved in the process for forming a motion sensor shown in FIGS. 1 and 2;
FIG. 7 is a fragmentary cross sectional elevation view illustrating a step, subsequent to the step of FIG. 6, involved in the process for forming a motion sensor shown in FIGS. 1 and 2;
FIG. 8 is a fragmentary cross sectional elevation view illustrating a step, subsequent to the step of FIG. 7, involved in the process for forming a motion sensor shown in FIGS. 1 and 2;
FIG. 9 is a fragmentary cross sectional elevation view illustrating a step, subsequent to the step of FIG. 8, involved in the process for forming a motion sensor shown in FIGS. 1 and 2;
FIG. 10 is a fragmentary cross sectional elevation view illustrating a step, subsequent to the step of FIG. 9, involved in the process for forming a motion sensor shown in FIGS. 1 and 2;
FIG. 11 is a fragmentary cross sectional elevation view illustrating a step, subsequent to the step of FIG. 10, involved in the process for forming a motion sensor shown in FIGS. 1 and 2;
FIG. 12 is a fragmentary cross sectional elevation view illustrating a step, subsequent to the step of FIG. 11, involved in the process for forming a motion sensor shown in FIGS. 1 and 2;
FIG. 13 is a fragmentary cross sectional elevation view illustrating a step, subsequent to the step of FIG. 12, involved in the process for forming a motion sensor shown in FIGS. 1 and 2;
FIG. 14 is a fragmentary cross sectional elevation view illustrating a step, subsequent to the step of FIG. 13, involved in the process for forming a motion sensor shown in FIGS. 1 and 2;
FIG. 15 is a fragmentary cross sectional elevation view illustrating a step, subsequent to the step of FIG. 14, involved in the process for forming a motion sensor shown in FIGS. 1 and 2;
FIG. 16 is a fragmentary cross sectional elevation view illustrating a step, subsequent to the step of FIG. 15, involved in the process for forming a motion sensor shown in FIGS. 1 and 2;
FIG. 17 is a fragmentary cross sectional elevation view illustrating a step, subsequent to the step of FIG. 16, involved in the process for forming a motion sensor shown in FIGS. 1 and 2;
FIG. 18 is a fragmentary cross sectional elevation view illustrating a step, subsequent to the step of FIG. 17;
FIG. 19 is a schematic view illustrating the configuration of a deposition system that is designed to deposit a polyurea film and an electrode film;
FIG. 20A is a cross sectional elevation view illustrating a beam with a piezoelectric film and an electrode film which are bent so as to apply a compressive stress to the piezoelectric film;
FIG. 20B is a cross sectional elevation view illustrating a beam with a piezoelectric film and an electrode film which are bent so as to apply a tensile stress to the piezoelectric film;
FIG. 21A is a cross sectional elevation view illustrating the motion sensor when applied with acceleration in the direction of X-axis;
FIG. 21B is a table showing relationships of electrodes and outputs appearing at the electrodes when the motion sensor is applied with acceleration in the direction of X-axis as shown in FIG. 21A;
FIG. 22A is a cross sectional elevation view illustrating the motion sensor when applied with acceleration in the direction of Z-axis;
FIG. 22B is a table showing relationships of electrodes and outputs appearing at the electrodes when the motion sensor is applied with acceleration in the direction of Z-axis s as shown in FIG. 22A;
FIG. 23 is a schematic view illustrating an accelerometer that detects three-axis acceleration;
FIG. 24 is a table showing relationships between three-axis accelerations and output voltages appearing at electrodes of the motion sensor of FIG. 1;
FIG. 25 is a side view illustrating a motion sensor in accordance with the second embodiment of the present invention;
FIG. 26 is a plan view illustrating the motion sensor of FIG. 25;
FIG. 27 is a schematic view illustrating one example of the configuration of a polarization system that is available to polarize the polyurea piezoelectric film of the element of the motion sensor of FIGS. 25 and 26;
FIG. 28 is a schematic view illustrating a measuring system for making operational verification of the single-axis motion sensor 41 shown in FIGS. 25 and 26;
FIG. 29 is a diagram illustrating the variation of output voltage over time from the motion sensor 41 shown in FIGS. 25 and 26 when applied with the impact acceleration in the direction of Z-axis;
FIG. 30 is a diagram illustrating a result of the fast Fourier Transform analysis for the damped oscillation of the output voltage shown in FIG 29;
FIG. 31 is a diagram illustrating the frequency characteristic of the motion sensor;
FIG. 32 is a cross sectional elevation view illustrating a motion sensor in accordance with the third embodiment of the present invention;
FIG. 33 is a plan view illustrating the motion sensor of FIG. 32;
FIG. 34 is a fragmentary cross sectional elevation view illustrating a step involved in a process for forming a motion sensor shown in FIGS. 32 and 33;
FIG. 35 is a fragmentary cross sectional elevation view illustrating a step subsequent to the step of FIG. 34, involved in a process for forming a motion sensor shown in FIGS. 32 and 33;
FIG. 36 is a fragmentary cross sectional elevation view illustrating a step subsequent to the step of FIG. 35, involved in a process for forming a motion sensor shown in FIGS. 32 and 33;
FIG. 37 is a fragmentary cross sectional elevation view illustrating a step subsequent to the step of FIG. 36, involved in a process for forming a motion sensor shown in FIGS. 32 and 33;
FIG. 38 is a plan view illustrating the step shown in FIG. 37;
FIG. 39 is a fragmentary cross sectional elevation view illustrating a step subsequent to the step of FIGS. 36 and 37, involved in a process for forming a motion sensor shown in FIGS. 32 and 33;
FIG. 40 is a fragmentary cross sectional elevation view illustrating a step subsequent to the step of FIG. 39, involved in a process for forming a motion sensor shown in FIGS. 32 and 33;
FIG. 41 is a fragmentary cross sectional elevation view illustrating a step subsequent to the step of FIG. 40, involved in a process for forming a motion sensor shown in FIGS. 32 and 33;
FIG. 42 is a plan view illustrating the step shown in FIG. 41;
FIG. 43 is a fragmentary cross sectional elevation view illustrating a step subsequent to the step of FIGS. 41 and 42, involved in a process for forming a motion sensor shown in FIGS. 32 and 33;
FIG. 44 is a fragmentary cross sectional elevation view illustrating a step subsequent to the step of FIG. 43, involved in a process for forming a motion sensor shown in FIGS. 32 and 33;
FIG. 45 is a fragmentary cross sectional elevation view illustrating a step subsequent to the step of FIG. 44, involved in a process for forming a motion sensor shown in FIGS. 32 and 33;
FIG. 46 is a plan view illustrating the step shown in FIG. 45;
FIG. 47 is a fragmentary cross sectional elevation view illustrating a step subsequent to the step of FIGS. 45 and 46, involved in a process for forming a motion sensor shown in FIGS. 32 and 33;
FIG. 48 is a fragmentary cross sectional elevation view illustrating a step subsequent to the step of FIG. 47, involved in a process for forming a motion sensor shown in FIGS. 32 and 33;
FIG. 49 is a plan view illustrating the step shown in FIG. 48;
FIG. 50 is a fragmentary cross sectional elevation view illustrating a sequential step involved in the process for forming the motion sensor shown in FIGS. 32 and 33, subsequent to the step of FIGS. 48 and 49;
FIG. 51 is a plan view illustrating the step shown in FIG. 50;
FIG. 52 is a fragmentary cross sectional elevation view illustrating a sequential step involved in the process for forming the motion sensor shown in FIGS. 32 and 33, subsequent to the step of FIGS. 50 and 51;
FIG. 53 is a plan view illustrating the step shown in FIG. 52;
FIG. 54 is a fragmentary cross sectional elevation view illustrating a sequential step involved in the process for forming the motion sensor shown in FIGS. 32 and 33, subsequent to the step of FIGS. 52 and 53;
FIG. 55 is a plan view illustrating the step shown in FIG. 54;
FIG. 56 is a schematic perspective view illustrating a rotational velocity sensor that utilizes Coriolis' force;
FIG. 57A is a cross sectional elevation view illustrating oscillation in the direction of X-axis of a beam with weights when the AC voltage is applied to the electrodes of the rotational velocity sensor shown in FIG 56;
FIG. 57B is a table showing relationships of electrodes and AC voltage inputs to the electrodes of the rotational velocity sensor shown in FIG 57A;
FIG. 58 is a schematic perspective view illustrating a two-directions inclination sensor utilizing a motion sensor;
FIG 59 is a cross sectional elevation view illustrating oscillation or swing in the direction of X-axis of the weights when the AC voltage is applied to the electrodes of the two-directions inclination sensor of FIG. 58;
FIG. 60 is a diagram illustrating resonant frequency characteristics of the two-directions inclination sensor of FIG 58;
FIG 61 is a schematic perspective view illustrating another two-directions inclination sensor utilizing a motion sensor;
FIG. 62 is a schematic perspective view illustrating a pressure sensor that includes the motion sensor;
FIG. 63 is a diagram illustrating resonant frequency characteristics of the pressure sensor of FIG 62;
FIG. 64 is a schematic perspective view illustrating another pressure sensor that includes an array of motion sensors; and
FIG. 65 is a schematic perspective view illustrating a tactile controller.

### DETAILED DESCRIPTION OF THE INVENTION

Selected embodiments of the present invention will now be described with reference to the drawings. It will be apparent to those skilled in the art from this disclosure that the following descriptions of the embodiments of the present invention are provided for illustration only and not for the purpose of limiting the invention as defined by the appended claims and their equivalents.

### First Embodiment:

### [Structure of Motion Sensor]

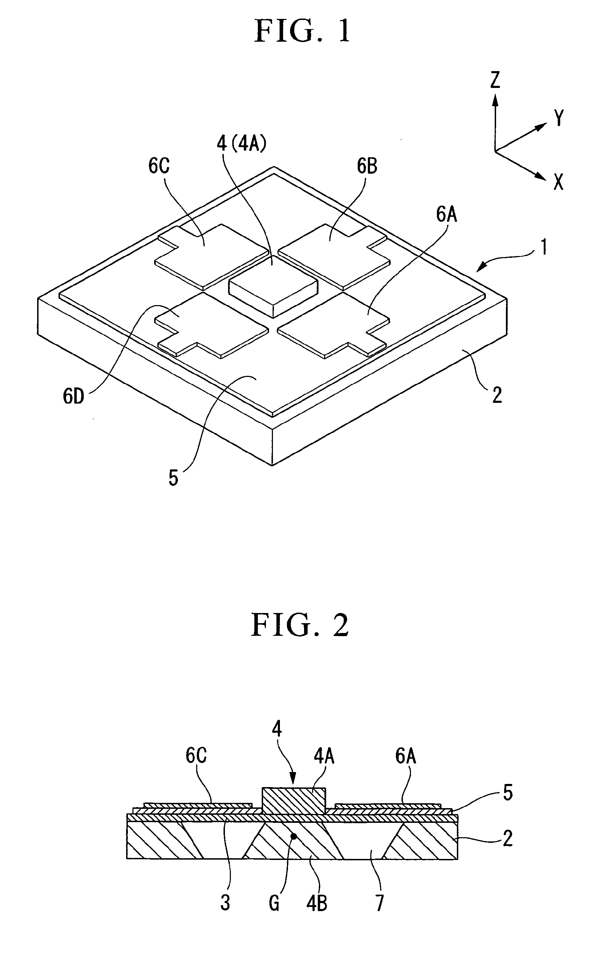

FIG 1 is a schematic perspective view illustrating a motion sensor in accordance with a first embodiment of the present invention. FIG. 2 is a cross sectional elevation view of the motion sensor, taken along an X-axis of FIG. 1. A motion sensor 1 can be used for a three-axis accelerometer. The motion sensor 1 may include a substrate 2, a beam 3, a weight 4, a piezoelectric film 5, and electrodes 6A, 6B, 6C and 6D. The beam 3 may be realized by a planer beam that is supported by the substrate 2. The weight 4 may be disposed at a central area of the motion sensor 1. The weight 4 may be attached to the center portion of the beam 3. The piezoelectric film 5 may be provided on the beam 3. In some cases, the piezoelectric film 5 may be provided on the almost entire surface of the beam 3, except on the central area of the beam 3. The electrodes 6A, 6B, 6C and 6D may be provided on the piezoelectric film 5. In some cases, the electrodes 6A, 6B, 6C and 6D may be disposed around the weight 4 and on the piezoelectric film 5. Typically, the electrodes 6A, 6B, 6C and 6D may be disposed to be symmetrical to the center of the s motion sensor 1.

In some cases, the substrate 2 may be made of, but not limited to, a borosilicate glass. The substrate 2 forms a square-frame supporter having an opening 7 at its center.

In some cases, the beam 3 may be shaped in a square plate having the same dimension as the substrate 2 so that the beam 3 has outside edges that are aligned to the outside edges of the substrate 2. In some cases, the beam 3 may have a thickness of 5 micrometers. The beam 3 may be secured to the substrate 2 so that the beam 3 covers not only the substrate 2 but also the opening 7. In some cases, the beam 3 may be made of, but not limited to, Ni or Ni-alloys such as NiFe.

In some cases, the weight 4 may include, but is not limited to, a top weight 4A and a bottom weight 4B. The top weight 4A may be secured to the center area of the top surface of the beam 3. The bottom weight 4B may be secured to the center area of the bottom surface of the beam 3. The center portion of the beam 3 may be sandwiched between the top and bottom weights 4A and 4B. In this case, the top and bottom weights 4A and 4B may be different in mass from each other. The weight 4 that is constituted by the top and bottom weights 4A and 4B may have the gravity center G which is positioned under the beam 3 as shown in FIG 2. In some cases, the top and bottom weights 4A and 4B may be different in either material or three-dimensional size or both from each other, so that they are different in mass from each other. In some cases, the top weight 4A may be made of, but is not limited to, the same material as the beam 3, for example Ni or Ni-alloy such as NiFe. The bottom weight 4B may be made of, but is not limited to, the same material as the substrate 2, for example, the borosilicate glass. The top weight 4A has a squire-shape in plan view. The origin of three axes, X-axis, Y-axis and Z-axis is positioned at the center of the top weight 4A.

The piezoelectric film 5 may be an organic piezoelectric film. Typically, the organic piezoelectric film may be made of, but not limited to, polyurea. A typical example of the thickness of the piezoelectric film 5 may be, but is not limited to, about 1 micrometer.

The electrodes 6A, 6B, 6C and 6D may be disposed on the top surface of the piezoelectric film 5 and around the top weight 4A. The electrodes 6A, 6B, 6C and 6D have a point-symmetrical layout to the center of the top weight 4A. In some cases, each of the electrodes 6A, 6B, 6C and 6D may have a modified rectangular shape. The electrodes 6A and 6C may be distanced in the direction parallel to the X-axis. The electrodes 6A and 6C may be positioned in opposing sides of the top weight 4A in the direction parallel to the X-axis. The electrodes 6B and 6D may be distanced in the direction parallel to the Y-axis. The electrodes 6B and 6D may be positioned in opposing sides of the top weight 4A in the direction parallel to the Y-axis. The electrodes 6A, 6B, 6C and 6D are made of a conductive material. Typical examples of the electrodes 6A, 6B, 6C and 6D may include, but are not limited to, Al, Cu, Au, Pt, Ag, and AlSi. The thickness of the electrodes 6A, 6B, 6C and 6D may typically be, but is not limited to, 1000 angstroms.

### [Process for Forming Motion Sensor]

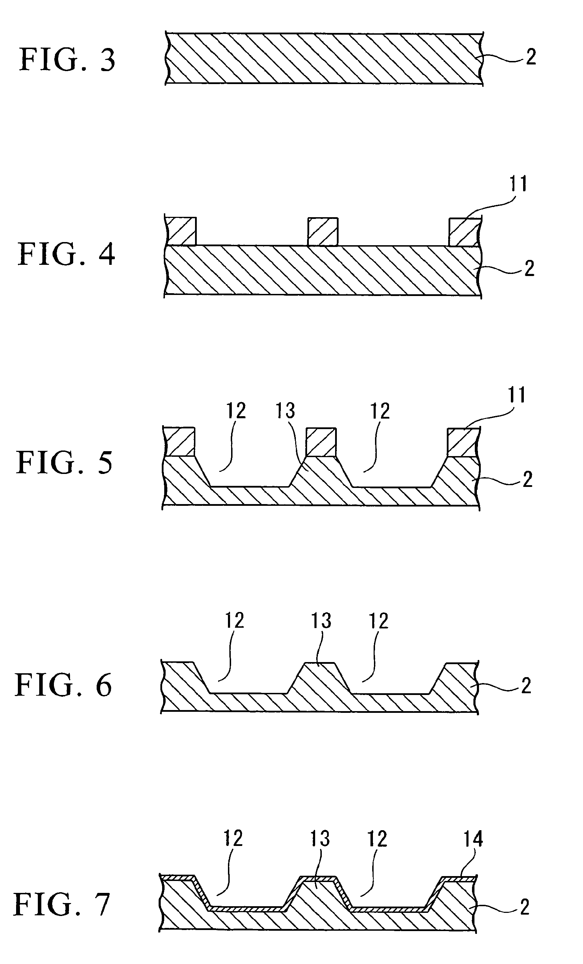

The process for forming the motion sensor 1 will be described. FIGS. 3 through 18 are fragmentary cross sectional elevation views illustrating sequential steps involved in a process for forming a motion sensor shown in FIGS. 1 and 2.

As shown in FIG 3, a substrate 2 is prepared.

As shown in FIG. 4, a resist film is applied on the top surface of the substrate 2. A photo-lithography process is carried out to form a first photo-resist pattern 11 over the substrate 2.

As shown in FIG. 5, an etching process is carried out by using the first photo-resist pattern 11 as a mask, thereby selectively etching the substrate 2, so that the substrate 2 has a recessed portion 12 and a raised portion 13 which is surrounded by the recessed portion 12. The raised portion 13 is bounded to the recessed portion 12 by a sloped wall. The recessed portion 12 will become the opening 7. The raised portion 13 will become the bottom weight 4B. For example, the etching process may be realized by a reactive ion etching process using a CF₄ gas. The reactive ion etching process is one of the anisotropic etching processes. The etching depth may be set 200 micrometers, for example. The recessed portion 12 decreases in width as the depth becomes deeper.

As shown in FIG 6, the first photo-resist pattern 11 is removed from the substrate 2 by an organic solvent.

As shown in FIG. 7, a first plating seed layer 14 is formed on the substrate 2 so that the first plating seed layer 14 extends over the surface of the recessed portion 12 and the surface of the raised portion 13. For example, the first plating seed layer 14 may be a Cu-layer can be formed by a Cu-sputtering process. The thickness of the first plating seed layer 14 may be, but is not limited to, 3000 angstroms.

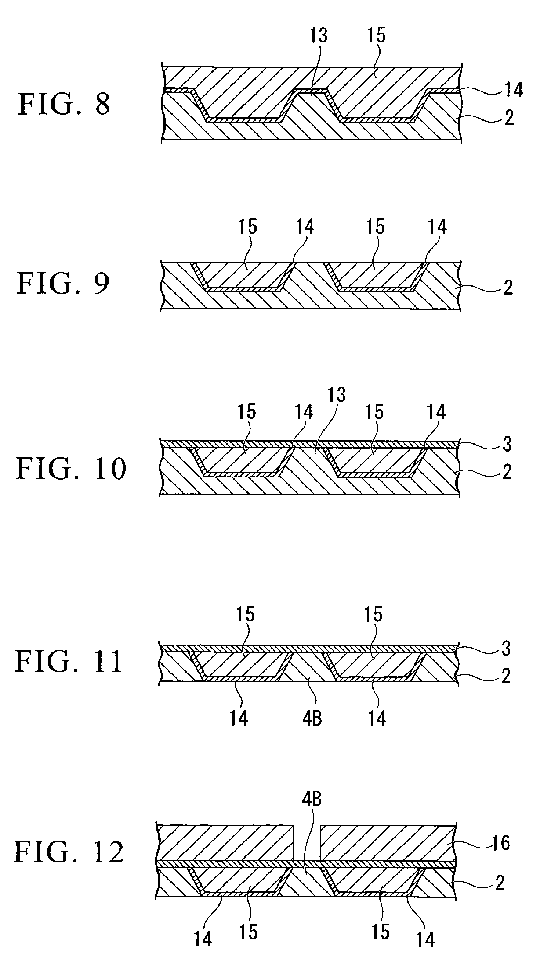

As shown in FIG 8, a sacrificial layer 15 is formed over the first plating seed layer 14. The sacrificial layer 15 may be made of Cu. The sacrificial layer 15 may be formed by electrolyte plating process. The thickness of the sacrificial layer 15 may be, but is not limited to, 300 micrometers.

As shown in FIG 9, at least one of grinding and polishing processes may be carried out to selectively remove the sacrificial layer 15 and the first plating seed layer 14 from the substrate 2 so as to leave the sacrificial layer 15 and the first plating seed layer 14 within the recessed portion 12 of the substrate 2. As a result, the top surface of the substrate 2 is exposed.

As shown in FIG 10, a second plating seed layer 3 is formed over the exposed surfaces of the substrate 2, the sacrificial layer 15 and the first plating seed layer 14. The second plating seed layer 3 will become the beam 3. In some cases, the second plating seed layer 3 may be made of Ni. The second plating seed layer 3 may be formed by, but not limited to, an Ni-sputtering process. The thickness of the second plating seed layer 3 may be, but is not limited to, 5 micrometers. Typical examples of the material of the second plating seed layer 3 may include, but are not limited to, Ni and Ni-alloys such as NiFe. The second plating seed layer 3 performs as a beam 3.

As shown in FIG 11, at least one of grinding and polishing processes may be carried out for grinding and/or polishing the substrate 2 in opposite side to the side in which the second plating seed layer 3 is disposed, so that the first plating seed layer 14 is exposed. As a result, the raised portion 13 becomes the bottom weight 4B. In some cases, the at least one of grinding and polishing processes may also be continued out until the sacrificial layer 15 is exposed.

As shown in FIG 12, a photo-resist film is applied on the second plating seed layer 3. A photo-lithography process is carried out to form a second photo-resist pattern 16 over the second plating seed layer 3. The second photo-resist pattern 16 has an opening that reaches a center portion of the second plating seed layer 3. The center portion of the second plating seed layer 3 is positioned over the bottom weight 4B.

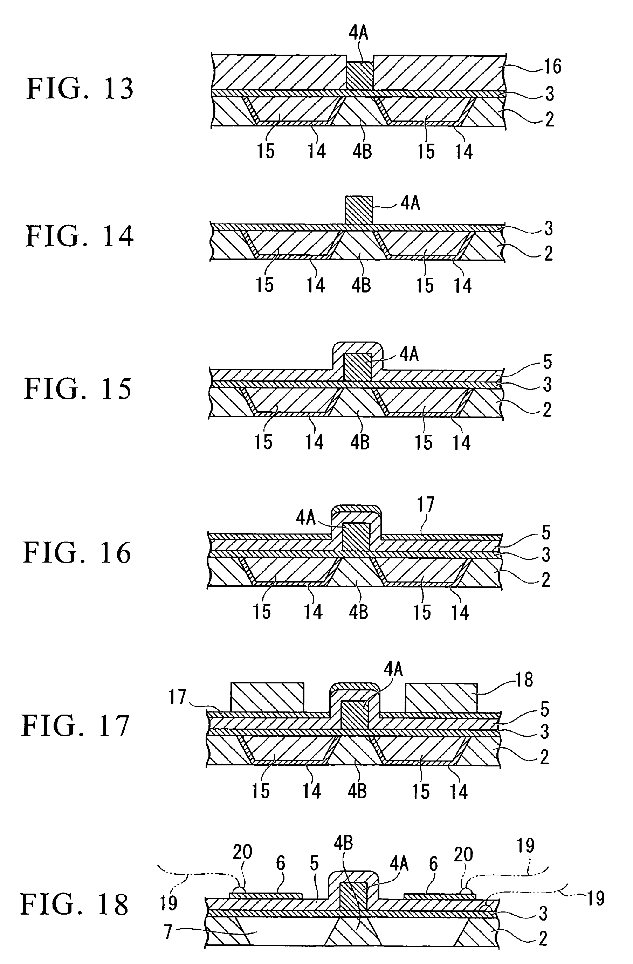

As shown in FIG 13, a top weight 4A is selectively formed in the opening of the second photo-resist pattern 16 and on the center portion of the second plating seed layer 3. The top weight 4A is defined by the opening of the second photo-resist pattern 16. The top weight 4A is secured to the second plating seed layer 3. The second plating seed layer 3 constitutes the beam 3. The top weight 4A may be made of Ni. Typical examples of the material of the top weight 4A may include, but are not limited to, Ni and Ni-alloys such as NiFe. The thickness of the top weight 4A may be, but is not limited to, 50 micrometers.

As shown in FIG. 14, the second photo-resist pattern 16 is removed from the beam 3 by using an organic solvent.

As shown in FIG 15, a piezoelectric film 5 is formed over the beam 3 and the top weight 4A. The piezoelectric film 5 may be made of polyurea. The piezoelectric film 5 made of polyurea may be formed by a vapor deposition polymerization process. The thickness of the piezoelectric film 5 made of polyurea may be, but is not limited to, 1 micrometer.

As shown in FIG 16, an electrode layer 17 is formed on the piezoelectric film 5. The electrode layer 17 may be made of a conductive material such as Al. Typical examples of the material of the electrode layer 17 may include, but are not limited to, Al, Cu, Au, Pt, Ag, and AlSi. The thickness of the electrode layer 17 may be, but is not limited to, 1000 angstroms.

As shown in FIG. 17, a resist film is applied on the electrode layer 17. A photo-lithography process is carried out to form a third resist pattern 18 on the electrode layer 17.

As shown in FIG 18, an anisotropic etching process is carried out using the third resist pattern 18 as a mask to selectively remove the electrode layer 17, thereby forming electrodes 6A, 6B, 6C, and 6D on the piezoelectric film 5. Namely, the electrode layer 17 is selectively etched and divided into four separate patterns that perform as the electrodes 6A, 6B, 6C, and 6D. The sacrificial layer 15, the first plating seed layer 14, and the third resist pattern 18 are removed, thereby forming the opening 7 and the bottom weight 4B. The bottom weight 4B is positioned on the center area of the bottom surface of the beam 3. As shown in FIG 18, the piezoelectric film 5 still covers the top weight 4A, which is different from what is shown in FIG 1. The center portion of the beam 3 is sandwiched between the top and bottom weights 4A and 4B.

An electric field and a higher temperature may be applied to polarize the piezoelectric film 5. For example, leads 19 may be connected via conductive pastes 20 to the electrodes 6A, 6B, 6C, and 6D. A voltage of 80V is applied via the leads 19 to the electrodes 6A, 6B, 6C, and 6D, while heating the piezoelectric film 5 up to 180°C, thereby causing polarization of the piezoelectric film 5.

The piezoelectric motion sensor of this embodiment does not need any floating electrode structure that is needed for capacitive motion sensor. The piezoelectric motion sensor of this embodiment can simplify the MEMS processes, thereby reducing the manufacturing cost.

In some cases, the beam 3 may be made of a conductive material such as Ni. The beam 3 made of the conductive material can perform as a bottom electrode for the piezoelectric film 5.

In other cases, it may be possible as a modification that the beam 3 is made of an insulating material such as a polyimide resin. In this case, a bottom electrode layer is additionally provided on the beam 3, and the piezoelectric film 5 is provided on the bottom electrode layer so that the bottom electrode layer is sandwiched between the beam 3 and the piezoelectric film 5.

In some cases, the bottom weight 4B may have a tapered shape such as the width decreases as the position comes closer to the beam 3. In other cases, the bottom weight 4B may have a non-tapered shape with a constant width.

In some cases, both the top and bottom weights 4A and 4B are provided over and under the center area of the beam 3. In other cases, it is possible as a modification that the weight 4 is constituted by only the bottom weight 4B. Namely, it is possible as a modification to provide only the bottom weight 4B under the center area of the beam 3.

### [Process for forming polyurea piezoelectric film]

The following descriptions will focus on the process for forming the polyurea piezoelectric film that is involved in the sequential processes for forming the motion sensor of this embodiment. Typically, the piezoelectric film made of polyurea may be deposited by vapor deposition polymerization method. Aromatic diamine (4,4'-diamino diphenyl ether (ODA)) and aromatic diisocyanate (4,4'-diphenyl methane diisocyanate (MDI)) are heated and evaporated in a vacuum.

The following chemical formula 1 represents condensation polymerization reaction between ODA and MDI. Polyurea is in the form of oligomers, each of which is composed of several monomers or several tens monomers, immediately after the vapor deposition polymerization process was carried out. The oligomers are heated up, while applying an electric field to the oligomers. The polymerization reaction of oligomers is initiated at a temperature of about 80°C. Heating the oligomers at 100°C for a few minutes under application of the electric field to the oligomer may almost complete polymerization of the oligomers, thereby forming a polymer film with a fixed orientation, which exhibits piezoelectricity.

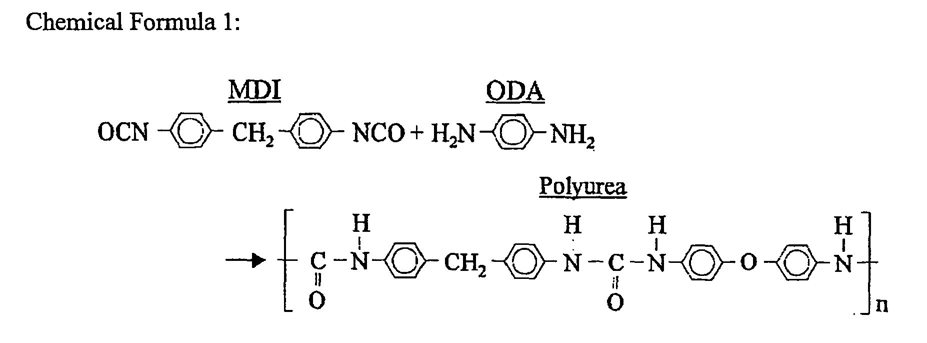

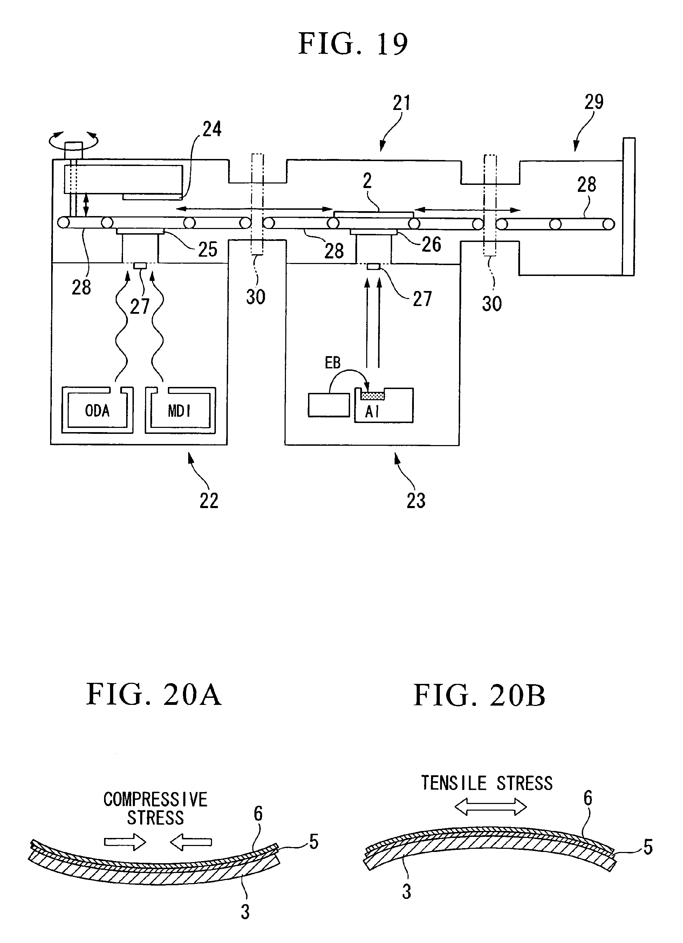

FIG 19 is a schematic view illustrating the configuration of a deposition system that is designed to deposit a polyurea film and an electrode film sequentially without breaking the vacuum. A deposition system 21 may be realized by a dual chamber deposition system that includes a polyurea deposition chamber 22 and an electrode deposition chamber 23. The dual chamber deposition system is designed to deposit a polyurea film and an electrode film sequentially.

In the polyurea deposition chamber 22, ODA and MDI are separately heated and evaporated to form gases of ODA and MDI. ODA and MDI as evaporated are then deposited on the substrate 2. It was confirmed that preferably ODA and MDI may be supplied at a molar ratio of 1:1 onto the substrate 2 so as to form a polyurea piezoelectric film. It was also confirmed that heating ODA and MDI at 62°C and 122°C respectively can supply ODA and MDI at the molar ratio of 1:1 onto the substrate 2. The temperature of the substrate 2 can be controlled in the range of 15°C to 18°C by a Peltier device 24 that is disposed over the substrate 2 when the substrate 2 is placed in the polyurea deposition chamber 22.

In the electrode deposition chamber 23, an electron beam is irradiated to evaporate aluminum and deposit evaporated aluminum on the polyurea piezoelectric film on the substrate 2.

In the polyurea deposition chamber 22, selective deposition of the polyurea film can be carried out using a mask 25. The mask 25 is located under the substrate 2 when the substrate 2 is set in the polyurea deposition chamber 22. The shape or pattern of the polyurea film depends on the shape or pattern of the mask 25.

In the electrode deposition chamber 23, selective deposition of the aluminum film can be carried out using a mask 26. The mask 26 is located under the substrate 2 when the substrate 2 is set in the electrode deposition chamber 23. The shape or pattern of the aluminum film depends on the shape or pattern of the mask 26.

The deposition rate can be monitored by any commercially available monitor. Typical example of the monitor may be, but is not limited to, a deposition controller of quartz oscillator type, for example, CRTM-1000 which is commercially available from ULVAC Inc. The deposition rate of the polyurea film may be controlled in the range of 2 angstroms/second to 3 angstroms/second. The deposition rate of the aluminum film may be controlled in the range of 5 angstroms/second to 10 angstroms/second. The deposition system 21 may be designed to allow the substrate 2 to move between the polyurea deposition chamber 22 and the electrode deposition chamber 23, without breaking the vacuum in those chambers 22 and 23. The deposition system 21 may be designed to carry out to deposit the polyurea film and the electrode film sequentially without breaking the vacuum.

As shown in FIG 19, quartz microbalances 27 are provided under the masks 25 and 26 in the polyurea deposition chamber 22 and the electrode deposition chamber 23, respectively. Conveyers 28 for conveying the substrate 2 are further provided in the polyurea deposition chamber 22 and the electrode deposition chamber 23. The conveyers 28 may be realized by belt conveyers. The deposition system 21 further includes a load chamber 29 for carrying our and carrying in the substrate 2.

The deposition system 21 further includes first and second shutters 30. The first shutter 30 is provided between the polyurea deposition chamber 22 and the electrode deposition chamber 23. The first shutter 30 shuts the polyurea deposition chamber 22 out of the electrode deposition chamber 23, while the polyurea deposition process is carried out in the polyurea deposition chamber 22. The first shutter 30 also shuts the electrode deposition chamber 23 out of the polyurea deposition chamber 22, while the electrode deposition process is carried out in the electrode deposition chamber 23. The second shutter 30 is provided between the electrode deposition chamber 23 and the load chamber 29. The second shutter 30 shuts the electrode deposition chamber 23 out of the load chamber 29 while the electrode deposition process is carried out in the electrode deposition chamber 23. The second shutter 30 also shuts the load chamber 29 out of the electrode deposition chamber 23 when the substrate 2 is carried in or out of the load chamber 29.

Other organic materials having piezoelectricity such as polyvinylidine difluoride (PVDF) are formed in a wet process. It is difficult to define accurately the shape of the PVDF film. The PVDF film is not suitable for batch-process.

In contrast, polyurea is one of the organic materials having piezoelectricity. A polyurea film may be formed by a dry process so called to as a vapor deposition polymerization method. The polyurea film is suitable for reducing the thickness thereof. The polyurea film is also suitable for accurately controlling the thickness thereof. The polyurea film is also suitable for accurately defining the shape thereof. Using the polyurea film may allow fabrication of the piezoelectric motion sensor of substantially the same size as the piezoresistance motion sensor or the capacitive motion sensor.

The motion sensor using a polyurea film as the piezoelectric film has a high sensitivity. The piezoelectric constant "g" of polyurea is 280E-3 [Vm/N] which is greater by at least one digit than the piezoelectric constant "g" of a ceramic piezoelectric film PZT-4.

### [Principle of detecting acceleration]

The motion sensor 1 as described above includes the beam 3 and the substrate 2. The beam 3 has side portions and the center portion. The beam 3 has mechanical flexibility. The portions of the beam 3 are supported by the substrate 2. The center portion of the beam 3 is adjacent to the opening 7 of the substrate 2. The center portion of the beam 3 is attached with the top and bottom weights 4A and 4B. The substrate 2 mechanically supports the beam 3 so that the side portions of the beam 3 are fixed, while the center portion with the top and bottom weights 4A and 4B are movable and displaceable upwardly and downwardly. Namely, the substrate 2 mechanically supports the beam 3 so as to allow the beam 3 to be bendable.

FIG 20A is a cross sectional elevation view illustrating the beam 3 with the piezoelectric film 5 and the electrode film 6 which are bent so as to apply a compressive stress to the piezoelectric film 5. When the beam 3 is bent so that the center portion of the beam 3 is displaced downwardly, the compressive stress is applied to the piezoelectric film 5 that extends over the beam 3. Applying the compressive stress to the piezoelectric film 5 generates a plus voltage at the electrode 6.

FIG. 20B is a cross sectional elevation view illustrating the beam 3 with the piezoelectric film 5 and the electrode film 6 which are bent so as to apply a tensile stress to the piezoelectric film 5. When the beam 3 is bent so that the center portion of the beam 3 is displaced upwardly, the tensile stress is applied to the piezoelectric film 5 that extends over the beam 3. Applying the tensile stress to the piezoelectric film 5 generates a minus voltage at the electrode 6.

The principle of detecting the three-axis acceleration based on the deformation of the beam 3 will be described. X-axis, Y-axis and Z-axis are set to the motion sensor 1 as shown in FIG 1. The origin of three axes, X-axis, Y-axis and Z-axis is positioned at the center of the top weight 4A. The bottom weight 4B has larger mass than the top weight 4A. The gravity center G is positioned under the center of the beam 3. Namely, the gravity center G is positioned on the bottom weight 4B as shown in FIG 2.

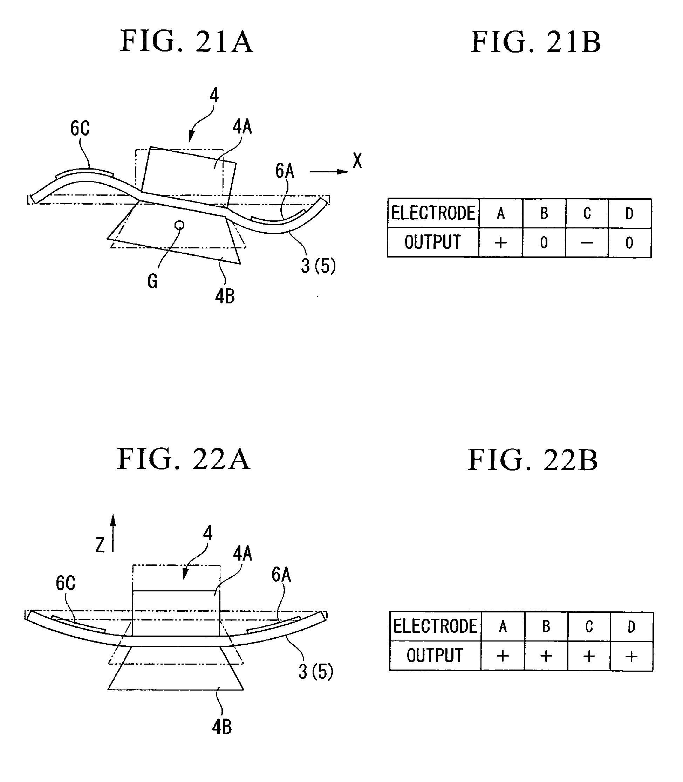

FIG 21A is a cross sectional elevation view illustrating the motion sensor when applied with acceleration in the direction of X-axis. FIG. 21B is a table showing relationships of electrodes and outputs appearing at the electrodes when the motion sensor is applied with acceleration in the direction of X-axis as shown in FIG 21A.

The beam 3 includes the center portion and first to fourth portions. The center position of the beam 3 is interposed between the top and bottom weights 4A and 4B. The first portion of the beam 3 is positioned under the electrode 6A. The second portion of the beam 3 is positioned under the electrode 6B. The third portion of the beam 3 is positioned under the electrode 6C. The fourth portion of the beam 3 is positioned under the electrode 6D.

The piezoelectric film 5 includes the center portion and first to fourth portions. The center portion of the piezoelectric film 5 is positioned under the top weight 4A. The first portion of the piezoelectric film 5 is positioned under the electrode 6A. The second portion of the piezoelectric film 5 is positioned under the electrode 6B. The third portion of the piezoelectric film 5 is positioned under the electrode 6C. The fourth portion of the piezoelectric film 5 is positioned under the electrode 6D.

When acceleration is applied to the weights 4A and 4B accelerated in the plus direction of X-axis, the beam 3 is deformed as shown in FIG 21A. The gravity center G is moved toward the minus direction of X-axis which is opposite to the plus direction of X-axis in which acceleration is applied to the weights 4A and 4B. The top weight 4A tilts toward the plus direction of X-axis, while the bottom weight 4B tilts toward the minus direction of X-axis.

The first portion of the beam 3 is bent so that the center of the first portion moves downwardly, wherein the first portion of the beam 3 is positioned under the electrode 6A. The third portion of the beam 3 is bent so that the center of the third portion moves upwardly, wherein the third portion of the beam 3 is positioned under the electrode 6C. The second and fourth portions of the beam 3 are not bent. Compressive stress is applied to the first portion of the piezoelectric film 5, while tensile stress is applied to the third portion of the piezoelectric film 5. Almost no stress is applied to the second and fourth portions of the piezoelectric film 5. Applying the compressive stress to the first portion of the piezoelectric film 5 generates plus charges at the electrode 6A. Applying the tensile stress to the third portion of the piezoelectric film 5 generates minus charges at the electrode 6C. Applying no stress to the second and fourth portions of the piezoelectric film 5 generates no charge at the electrodes 6B and 6D. As shown in FIG. 21B, the output voltage appearing at the electrode 6A is plus. The output voltage appearing at the electrode 6B is zero. The output voltage appearing at the electrode 6C is minus. The output voltage appearing at the electrode 6D is zero.

When acceleration is applied to the weights 4A and 4B accelerated in the plus direction of Y-axis, the beam 3 is deformed. The gravity center G is moved toward the minus direction of Y-axis which is opposite to the plus direction of Y-axis in which acceleration is applied to the weights 4A and 4B. The top weight 4A tilts toward the plus direction of Y-axis, while the bottom weight 4B tilts toward the minus direction of Y-axis.

The second portion of the beam 3 is bent so that the center of the second portion moves downwardly, wherein the second portion of the beam 3 is positioned under the electrode 6B. The fourth portion of the beam 3 is bent so that the center of the fourth portion moves upwardly, wherein the fourth portion of the beam 3 is positioned under the electrode 6D. The first and third portions of the beam 3 are not bent. Compressive stress is applied to the second portion of the piezoelectric film 5, while tensile stress is applied to the fourth portion of the piezoelectric film 5. Almost no stress is applied to the first and third portions of the piezoelectric film 5. Applying the compressive stress to the second portion of the piezoelectric film 5 generates plus charges at the electrode 6B. Applying the tensile stress to the fourth portion of the piezoelectric film 5 generates minus charges at the electrode 6D. Applying no stress to the first and third portions of the piezoelectric film 5 generates no charge at the electrodes 6A and 6C. The output voltage appearing at the electrode 6A is zero. The output voltage appearing at the electrode 6B is plus. The output voltage appearing at the electrode 6C is zero. The output voltage appearing at the electrode 6D is minus.

FIG 22A is a cross sectional elevation view illustrating the motion sensor when applied with acceleration in the direction of Z-axis. FIG. 22B is a table showing relationships of electrodes and outputs appearing at the electrodes when the motion sensor is applied with acceleration in the direction of Z-axis as shown in FIG 22A.

When acceleration is applied to the weights 4A and 4B accelerated in the plus direction of Z-axis, the beam 3 is deformed as shown in FIG. 22A. The center of the beam 3 and the weights 4A and 4B are moved downwardly or in the minus direction of Z-axis which is opposite to the plus direction of Z-axis in which acceleration is applied to the weights 4A and 4B. The top and bottom weights 4A and 4B does not tilt.

The first to fourth portions of the beam 3 are bent so that the centers of the first to fourth portions move downwardly, wherein the first to fourth portions of the beam 3 are positioned under the electrodes 6A, 6B, 6C and 6D, respectively. Compressive stress is applied to each of the first to fourth portions of the piezoelectric film 5. Applying the compressive stress to the first to fourth portions of the piezoelectric film 5 generates plus charges at the electrodes 6A, 6B, 6C and 6D. As shown in FIG 22B, the output voltages appearing at the electrodes 6A, 6B, 6C and 6D are plus.

When acceleration is applied to the weights 4A and 4B accelerated in the minus direction of Z-axis, the beam 3 is deformed. The center of the beam 3 and the weights 4A and 4B are moved upwardly or in the plus direction of Z-axis which is opposite to the minus direction of Z-axis in which acceleration is applied to the weights 4A and 4B. The top and bottom weights 4A and 4B does not tilt.

The first to fourth portions of the beam 3 are bent so that the centers of the first to fourth portions move upwardly, wherein the first to fourth portions of the beam 3 are positioned under the electrodes 6A, 6B, 6C and 6D, respectively. Tensile stress is applied to each of the first to fourth portions of the piezoelectric film 5. Applying the tensile stress to the first to fourth portions of the piezoelectric film 5 generates minus charges at the electrodes 6A, 6B, 6C and 6D. The output voltages appearing at the electrodes 6A, 6B, 6C and 6D are minus.

The three-axis acceleration can be detected by detecting the direction and magnitude of the deformation of the beam 3.

### [Three-Axis Accelerometer]

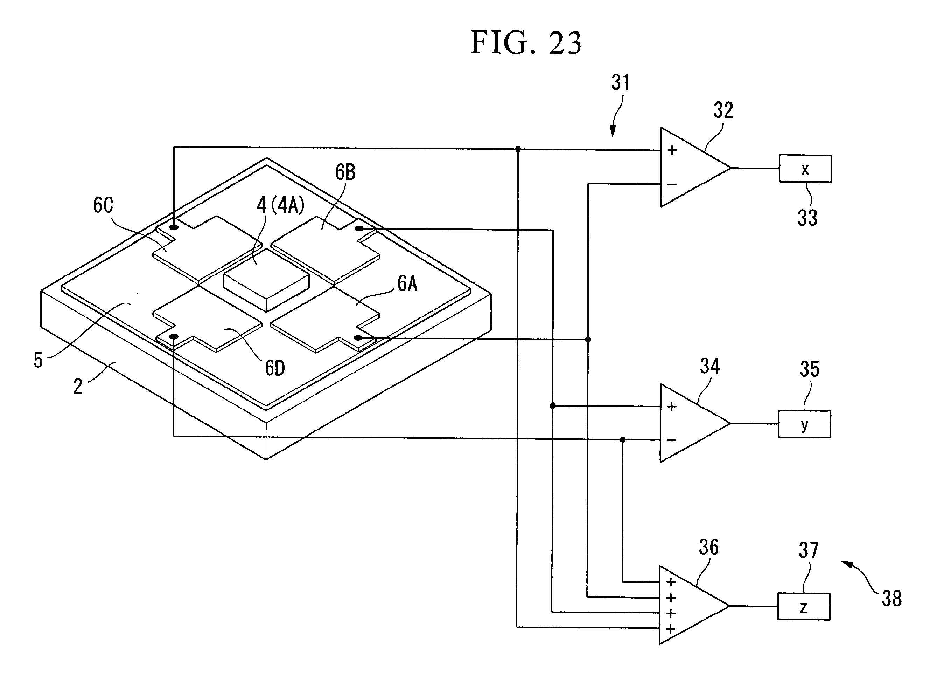

FIG 23 is a schematic view illustrating an accelerometer that detects three-axis acceleration. An accelerometer 31 of FIG. 23 may include, but is not limited to, the motion sensor 1 of FIG 1, and an output detector 38. The output detector 38 may be configured to detect X-axis acceleration, Y-axis acceleration, and Z-axis acceleration independently.

The output detector 38 may include, but is not limited to, differential circuits 32 and 34, an adder 36, an X-axis acceleration detecting unit 33, a Y-axis acceleration detecting unit 35, and a Z-axis acceleration detecting unit 37. The X-axis acceleration detecting unit 33 is connected to an output of the differential circuit 32. The inputs of the differential circuit 32 are connected to the electrodes 6A and 6C. The X-axis acceleration detecting unit 33 and the differential circuit 32 are provided to detect X-axis acceleration. The Y-axis acceleration detecting unit 35 is connected to an output of the differential circuit 34. The inputs of the differential circuit 34 are connected to the electrodes 6B and 6D. The Y-axis acceleration detecting unit 35 and the differential circuit 34 are provided to detect Y-axis acceleration. The Z-axis acceleration detecting unit 37 is connected to an output of the adder 36. The inputs of the adder 36 are connected to the electrodes 6A, 6B, 6C, and 6D.

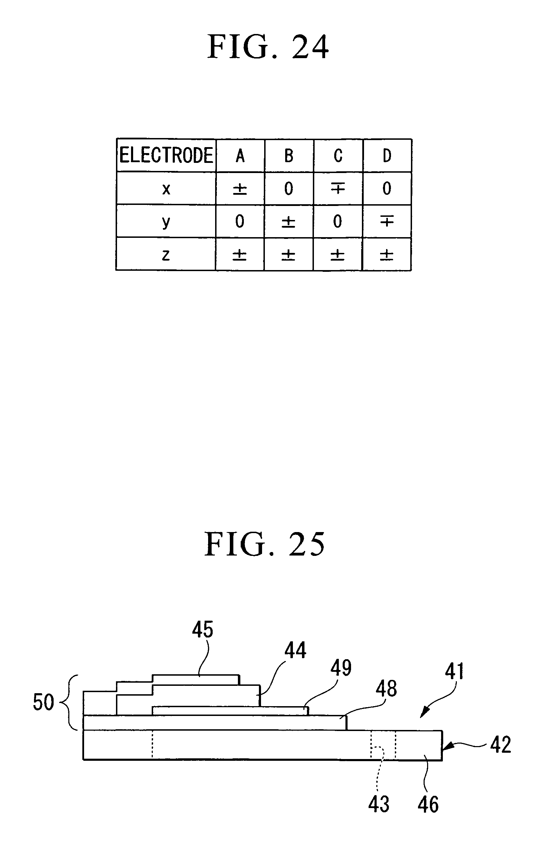

FIG. 24 is a table showing relationships between three-axis accelerations and output voltages appearing at electrodes 6A, 6B, 6C, and 6D of the motion sensor. When acceleration is applied to the motion sensor 1 in the plus direction of X-axis, the plus voltage output appears at the electrode 6A, zero voltage output appears at the electrode 6B, the minus voltage output appears at the electrode 6C, and zero voltage output appears at the electrode 6D. When acceleration is applied to the motion sensor 1 in the minus direction of X-axis, the minus voltage output appears at the electrode 6A, zero voltage output appears at the electrode 6B, the plus voltage output appears at the electrode 6C, and zero voltage output appears at the electrode 6D. When acceleration is applied to the motion sensor 1 in the plus direction of Y-axis, zero voltage output appears at the electrode 6A, the plus voltage output appears at the electrode 6B, zero voltage output appears at the electrode 6C, and the minus voltage output appears at the electrode 6D. When acceleration is applied to the motion sensor 1 in the minus direction of Y-axis, zero voltage output appears at the electrode 6A, the minus voltage output appears at the electrode 6B, zero voltage output appears at the electrode 6C, and the plus voltage output appears at the electrode 6D. When acceleration is applied to the motion sensor 1 in the plus direction of Z-axis, the pulse voltage outputs appear at the electrodes 6A, 6B, 6C, and 6D. When acceleration is applied to the motion sensor 1 in the minus direction of Z-axis, the minus voltage outputs appear at the electrodes 6A, 6B, 6C, and 6D.

### Second Embodiment:

### [Structure of Motion Sensor]

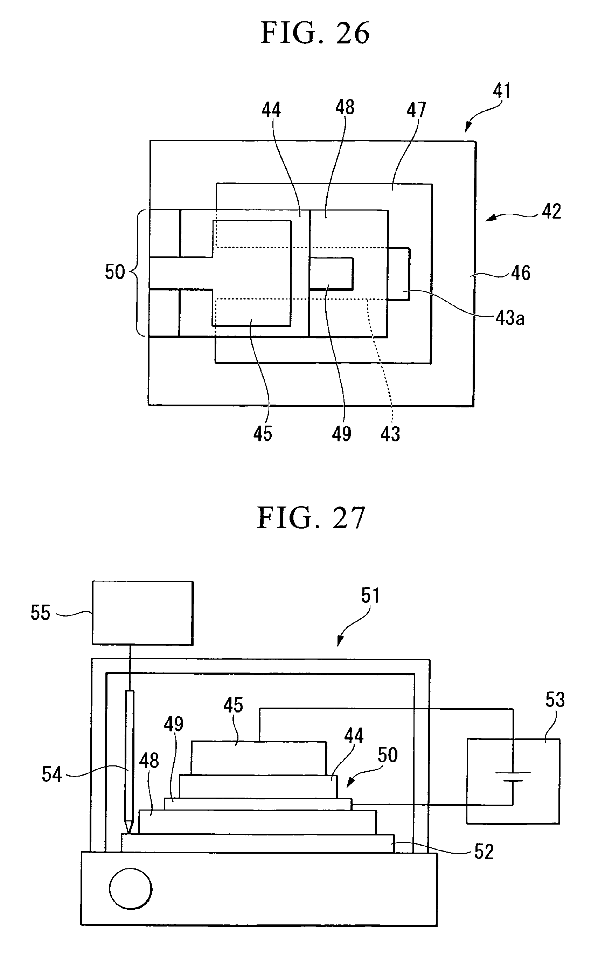

FIG. 25 is a side view illustrating a motion sensor in accordance with the second embodiment of the present invention. FIG 26 is a plan view illustrating the motion sensor of FIG. 25. A motion sensor 41 may be designed to detect a single-axis acceleration. The motion sensor 41 may include, but is not limited to, a substrate 42, a beam 43, an insulating film 48, a bottom electrode 49, a piezoelectric film 44, and a top electrode 45. The beam 43 is mechanically supported by the substrate 42. The insulating film 48 is disposed over the beam 43 and a part of the substrate 42. The bottom electrode 49 is disposed over the insulating film 48. The piezoelectric film 44 extends over the bottom electrode 49 and a part of the insulating film 48. The top electrode 45 extends over the piezoelectric film 44 and a part of the insulating film 48. The top and bottom electrodes 45 and 49 are separated by the piezoelectric film 44. The piezoelectric film 44 is sandwiched between the top and bottom electrodes 45 and 49.

The beam 43 has opposing first and second sides. The first side of the beam 43 is supported by the substrate 42. The second side of the beam 43 is free. Namely, the single-axis accelerometer 41 has a supporting structure in which the one side of the beam 43 is supported by the substrate 42. The three-axis accelerometer 1 has the different supporting structure in which the opposite sides of the beam 3 are supported by the substrate 2.

The substrate 42 may be constituted by a frame 46 having four sides that surrounds an opening 47. The beam 43 extends from the one side of the frame 46 to the opening 47. The beam 43 has the first side that is united with the one side of the frame 46 so that the first side of the beam 43 is supported by the substrate 42. The beam 43 has the second side opposite to the first side. The second side of the beam 43 is free. The second side of the beam 43 is positioned close to and is separated from the side opposing to the one side of the frame 46. The insulating film 48 extends over the beam 43 and the one side of the frame 46. The insulating film 48 has a wider width than the beam 43. The beam 43 has a projecting portion 43a adjacent to the second side which is free. The projecting portion 43a performs as weight. The insulating film 48 covers the beam 43 except for the projecting portion 43a. The insulating film 48 may be formed of a polyimide film.

The bottom electrode 49 is separated by the insulating film 48 from the beam 43. The piezoelectric film 44 may be made of an organic material. The piezoelectric film 44 may preferably be made of polyurea. The piezoelectric film 44 is provided over the bottom electrode 49. The top electrode 45 is provided over the piezoelectric film 44.

As shown in FIG. 26, the beam 43 has the projecting portion 43 a. The projecting portion 43a is not covered by the insulating film 48. The projecting portion 43a performs as weight. Namely, the beam 43 has the weight on the second side that is free and is opposite to the first side in which the beam 43 is supported by the substrate 42. The second side of the beam 43 is movable in the vertical direction when acceleration is applied to the motion sensor 41 in the vertical direction. Vertical motion of the second side of the beam 43 bends the beam 43 and the piezoelectric film 44. Downward motion of the second side of the beam 43 applies tensile stress to the piezoelectric film 44. Upward motion of the second side of the beam 43 applies compressive stress to the piezoelectric film 44. The motion sensor 41 is designed to detect vertical acceleration components. The piezoelectric film 44 may be wider than the beam 43. The bottom electrode 49 is narrower than the beam 43. The piezoelectric film 44 may have the same width as the insulating film 48.

In this embodiment, the projecting portion 43a performs as the weight. It is possible as a modification that additional weight is provided on the beam 43 except for the first side so that the second side of the beam 43 is movable in the vertical direction when acceleration is applied to the weight in the vertical direction. The additional weight may be provided under and/or over the beam 43.

It is also possible as a modification that the beam 43 has no projecting portion and alternating weight is provided on the beam 43 except for the first side so that the second side of the beam 43 is movable in the vertical direction when acceleration is applied to the alternating weight in the vertical direction. The alternating weight may be provided under and/or over the beam 43.

### [Process for Forming Motion Sensor]

The process for forming the motion sensor 41 will be described. The motion sensor 41 can be formed as follows. The bottom electrode 49 is stacked on the polyimide film 48 as the insulating film. The piezoelectric film 44 is stacked over the bottom electrode 49 and a part of the polyimide film 48. The top electrode 45 is stacked on the piezoelectric film 44, thereby forming an element 50. The element 50 includes the insulating film 48, the bottom electrode 49, the piezoelectric film 44 and the top electrode 45. The element 50 is attached to the substrate 42 with the beam 43.

For example, a polyimide film 48 having a thickness of 25 micrometers is prepared. A bottom electrode 49 made of A1 having a thickness of 0.1 micrometer is selectively deposited on the polyimide film 48. A piezoelectric film 44 of polyurea having a thickness of 3.5 micrometers is selectively formed over the bottom electrode 49 and the polyimide film 48. A top electrode 45 made of Al having a thickness of 1 micrometer is selectively deposited on the piezoelectric film 44. The polyurea film has a sandwiched portion that is sandwiched between the top and bottom electrodes 45 and 49. The sandwiched portion of the polyurea film performs as the piezoelectric film. The substrate 42 with the beam 43 is prepared. As a result, the element 50 which includes the insulating film 48, the bottom electrode 49, the piezoelectric film 44 and the top electrode 45 is attached to the beam 43 and the substrate 42. The beam 43 has flexibility or elasticity. The beam 43 performs as a spring-plate. The beam 43 may be made of, but not limited to, beryllium copper. The polarization of the polyurea piezoelectric film can be made by an electret method.

FIG. 27 is a schematic view illustrating one example of the configuration of a polarization system that is available to polarize the polyurea piezoelectric film 44 of the element 50 of the motion sensor 41 of FIGS. 25 and 26. The element 50 as formed is placed on an insulating tile 52. A high voltage D.C. power supply 53 is used to apply a D.C. voltage of 80V/µ m between the top and bottom electrodes 45 and 49. The high voltage D.C. power supply 53 may be realized by a High Resistancemeter (4339A) which is commercially available from Agilent technologies Inc. A thermocouple 54 is placed to contact with the insulating tile 52. The thermocouple 54 is connected to a temperature controller 55. The polarization temperature is controlled by the temperature controller 55. The polarization temperature can be controlled at 180°C for 10 minutes by taking into account that the heat resistant temperatures of polyurea and polyimide are 200°C and 400°C, respectively.

### [Operational Verification of Motion Sensor]

Acceleration is given to the motion sensor 41, thereby deforming the beam 43 and the piezoelectric film 44. Deformation of the beam 44 and the piezoelectric film 43 applies tensile or compressive stress to the piezoelectric film 44. A voltage is generated between the top and bottom electrodes 45 and 49. The following experiment was carried out.

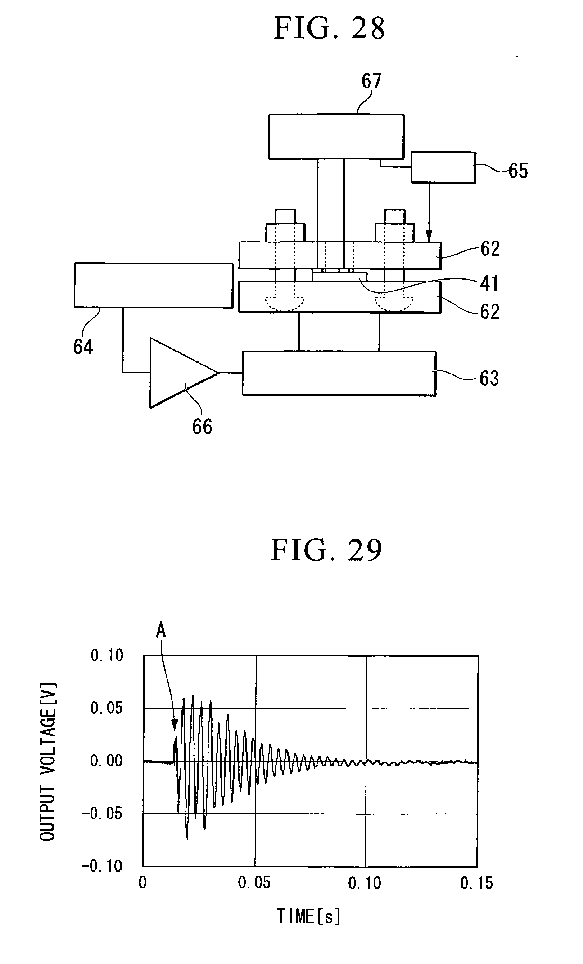

FIG. 28 is a schematic view illustrating a measuring system for making operational verification of the single-axis motion sensor 41 shown in FIGS. 25 and 26. The single axis motion sensor 41 is fixed onto a measuring system 61 shown in FIG 28. The measuring system 61 applies impact acceleration to the single-axis motion sensor 41. The single-axis motion sensor 41 is sandwiched between a pair of jigs 62. A vibration generator 63 can be used to vibrate the pair of jigs 62 that holds the single-axis motion sensor 41. An oscillator 64 is connected through an amplifier 66 to the vibration generator 63. The oscillator 64 generates a sine wave. The amplifier 66 amplifies the sine wave. The amplified sine wave is supplied to the vibration generator 63. The vibration generator 63 may be realized by 512-D/A which is commercially available from EMIC Inc. The oscillator 64 may be realized by WF1966 which is commercially available from NF Inc. A laser Doppler vibration meter 65 can be used to measure the vibration velocity of the par of jigs 62 holding the motion sensor 41. The laser Doppler vibration meter 65 may be realized by CLV1000 which is commercially available from Polytech Inc. The vibration acceleration can be calculated from the measured vibration velocity of the par of jigs 62. An oscilloscope 67 can be used to monitor the vibration acceleration. The outputs of the oscillator 64 and the amplifier 66 are adjusted so that the applied vibration acceleration becomes constant at 1g (9.8m/s²).

FIG. 29 is a diagram illustrating the variation of output voltage over time from the motion sensor 41 when applied with the impact acceleration in the direction of Z-axis. "A" represents the impact acceleration as applied to the motion sensor 41. The voltage output was obtained from the motion sensor 41 in response to the impact acceleration as applied to the motion sensor 41. The damped oscillation was observed. This means that the motion sensor 41 detected the acceleration in the direction of Z-axis.

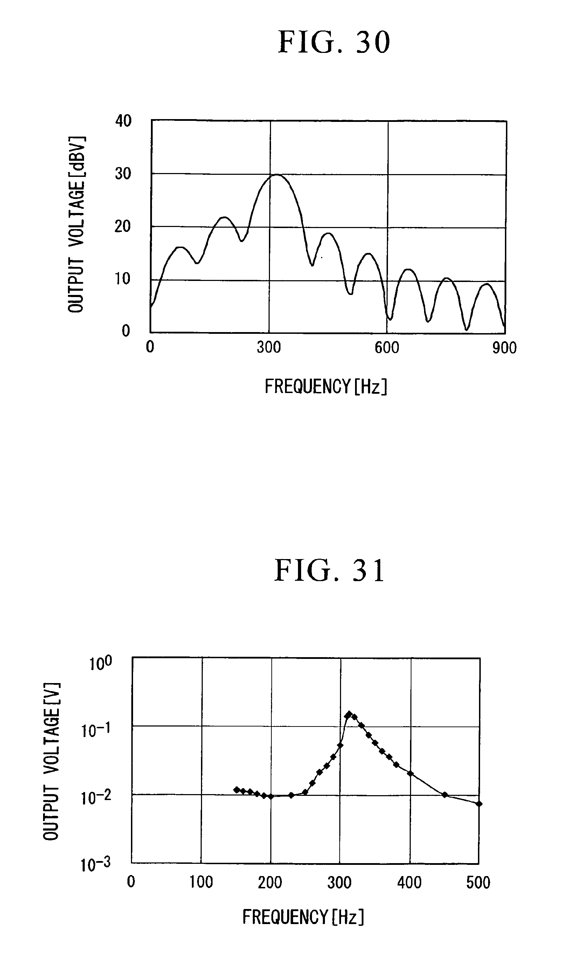

FIG 30 is a diagram illustrating a result of the fast Fourier Transform analysis for the damped oscillation of the output voltage shown in FIG. 29. The fast Fourier Transform analysis is applied to the range of 0.03 seconds to 0.031 seconds of the damped oscillation of the output voltage shown in FIG. 29. The mechanical resonance frequency was about 320Hz.

FIG. 31 is a diagram illustrating the frequency characteristic of the motion sensor 41. The resonance frequency was 313Hz which is close to the mechanical resonance frequency of about 320Hz as obtained by the fast Fourier Transform analysis. The output voltage was about 10mV/g at non-resonant frequency.

### Third Embodiment:

### [Structure of Motion Sensor]

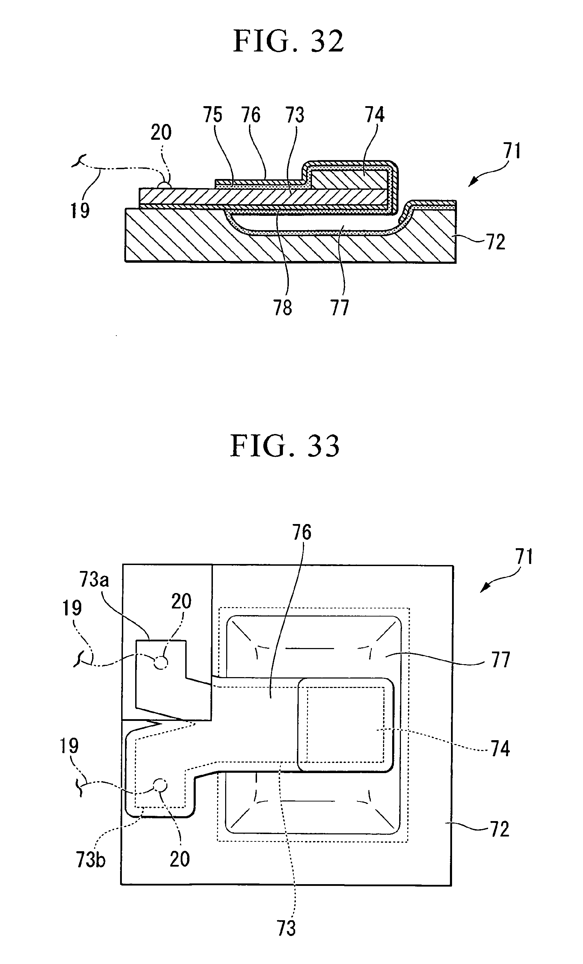

FIG. 32 is a cross sectional elevation view illustrating a motion sensor in accordance with the third embodiment of the present invention. FIG. 33 is a plan view illustrating the motion sensor of FIG. 32. A motion sensor 71 may be designed to detect a single-axis acceleration. The motion sensor 71 may include, but is not limited to, a substrate 72, a beam 73, a weight 74, a piezoelectric film 75, and a top electrode 76. The beam 73 is mechanically supported by the substrate 72. The beam 73 has first and second sides opposing each other. The first side of the beam 73 is supported by the substrate 72. The second side of the beam 73 is free. The beam 73 may be made of a conductive material. The weight 74 is disposed over the second side portion adjacent to the second side. The second side portion of the beam 73 is movable in the vertical direction. The piezoelectric film 75 extends along the second side portion of the beam 73. The piezoelectric film 75 extends at least over the second side portion of the beam 73. The top electrode 76 is disposed on the piezoelectric film 75.

The substrate 72 has a modified plate-shape. The substrate 72 has a side frame portion and a center recessed portion 77 that is surrounded by the side frame portion. The side frame portion of the substrate 72 has four sides. The beam 73 has the first side portion adjacent to the first side. The first side portion of the beam 73 is attached to one side of the side frame portion of the substrate 72. A plating seed layer 78 is formed on the bottom surface of the beam 73. Namely, the plating seed layer 78 extends under the beam 73. The second side portion of the beam 73 extends over the center recessed portion 77 of the substrate 72. The weight 74 is fixed to a part of the second side portion of the beam 73. The piezoelectric film 75 extends at least over the second side portion of the beam 73 and over the weight 74. The piezoelectric film 75 may be made of an organic material. The piezoelectric film 75 may preferably be made of polyurea. The top electrode 76 is formed on the piezoelectric film 75.

The first side portion of the beam 73 has a modified V-shape in plan view as shown in FIG. 33. Namely, the first side portion of the beam 73 has first and second divided portions 73a and 73b. The first divided portion 73a of the beam 73 is not covered by the top electrode 76. The second divided portion 73b of the beam 73 is covered by the top electrode 76. The first divided portion 73a of the beam 73 and the top electrode 76 are respectively connected to an external detecting circuit through leads 19 and conductive pastes 20. The beam 73 is made of a conductive material. The beam 73 in combination with the plating seed layer 78 performs as a bottom electrode for the piezoelectric film 75.

### [Process for Forming Motion Sensor]

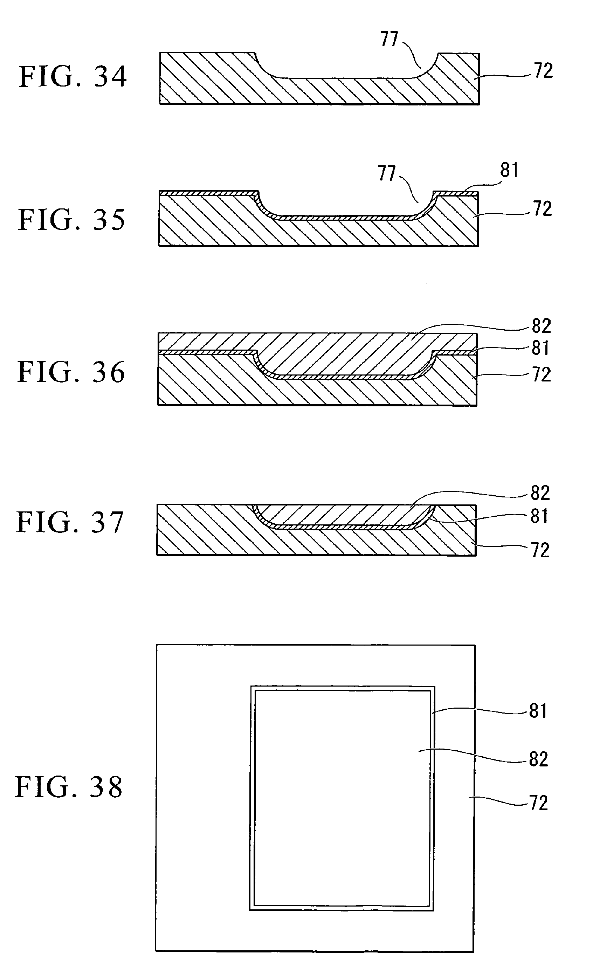

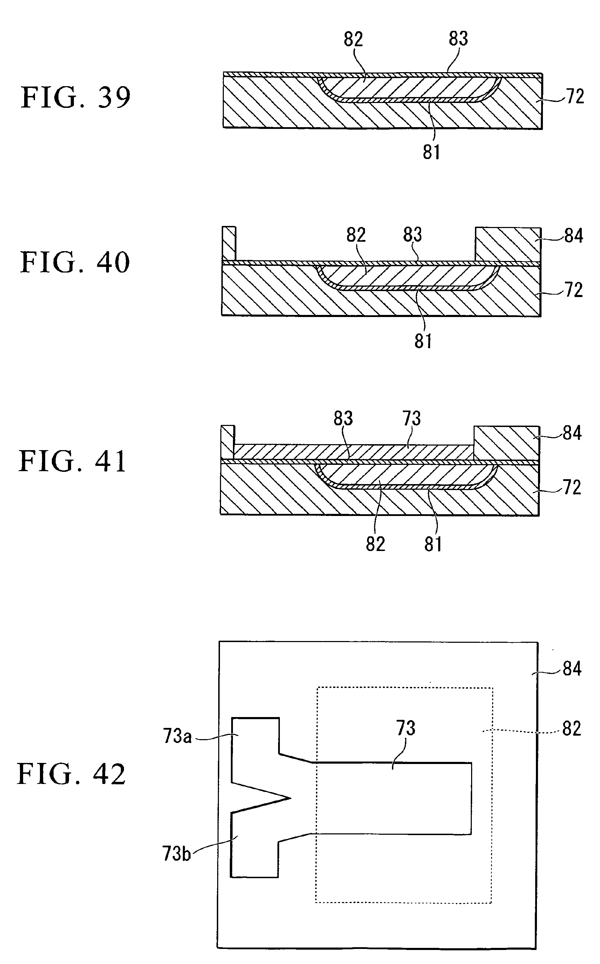

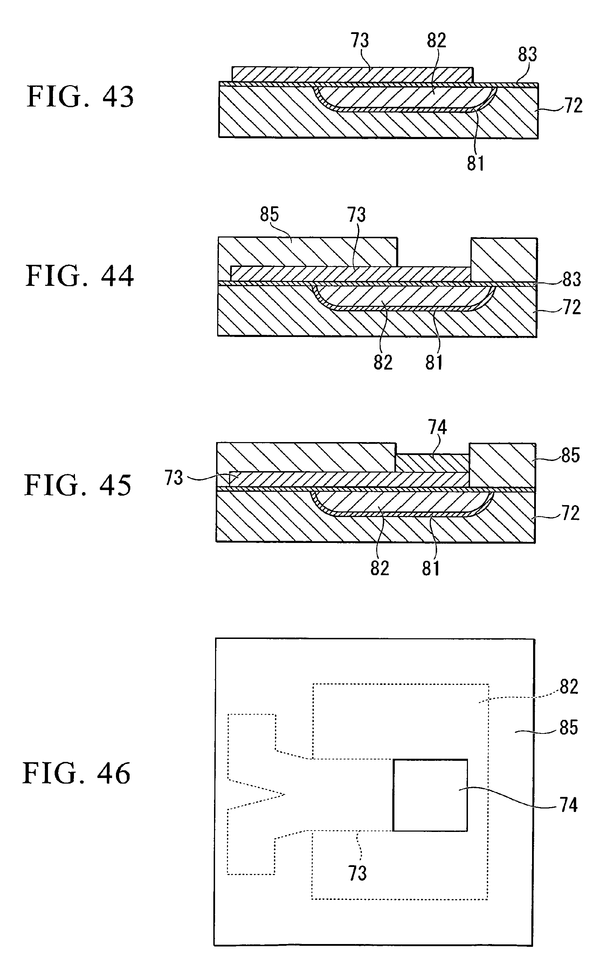

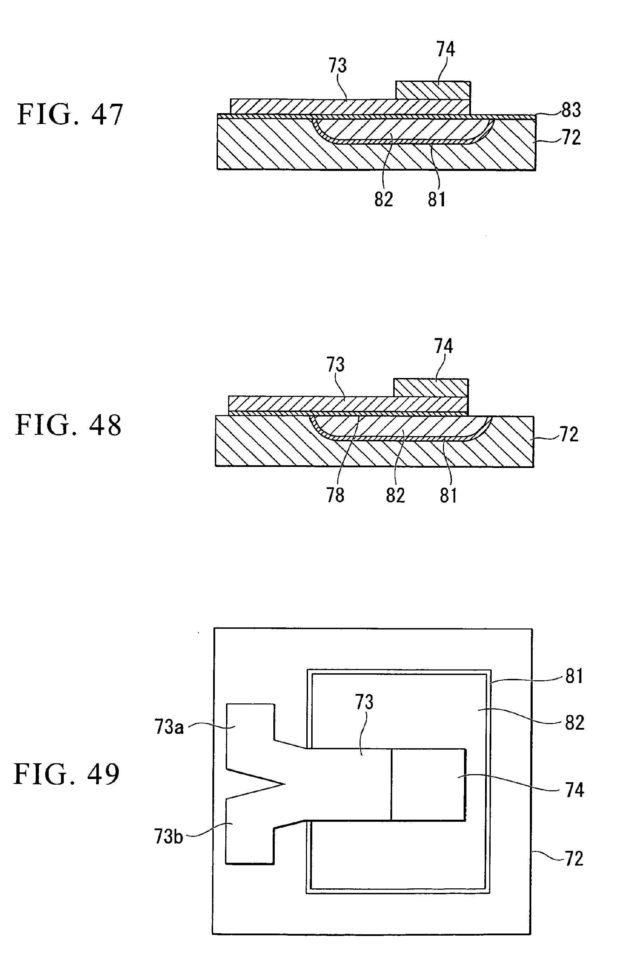

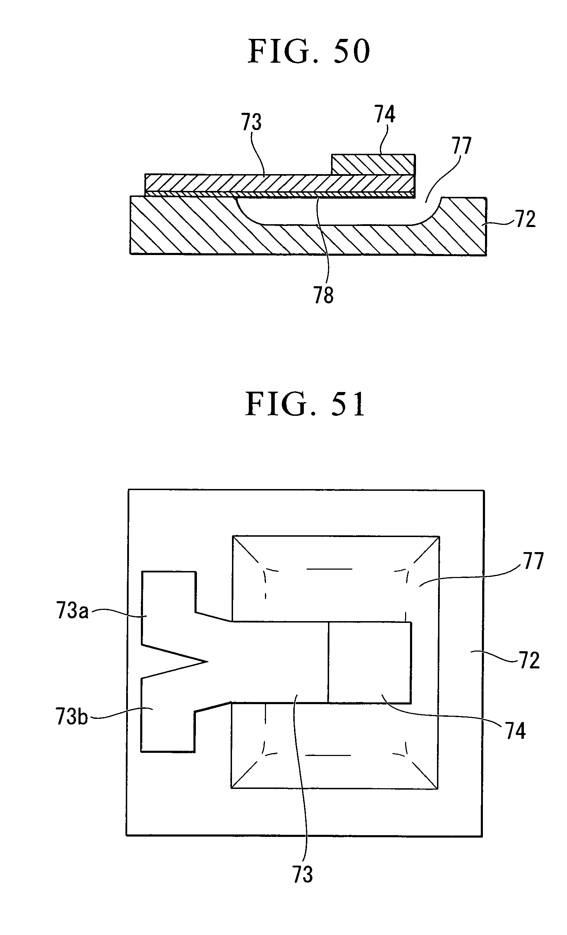

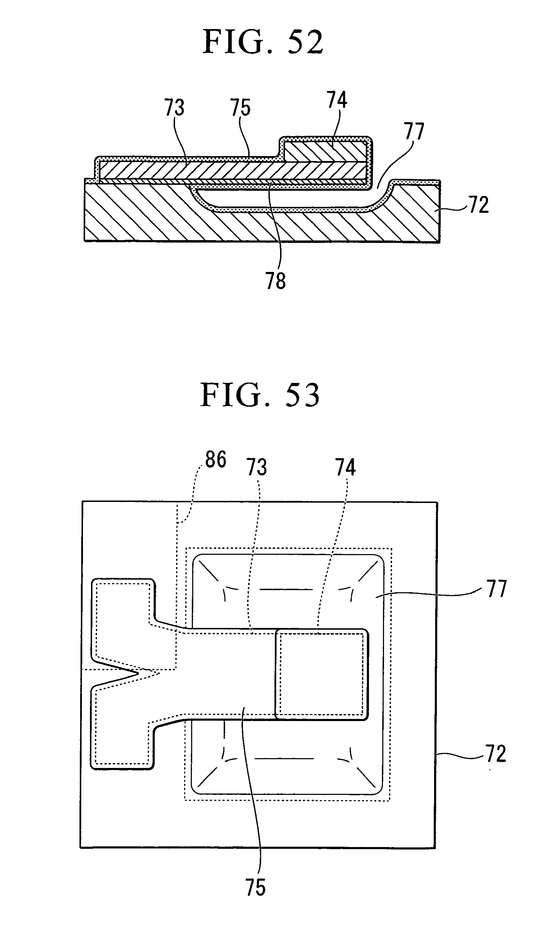

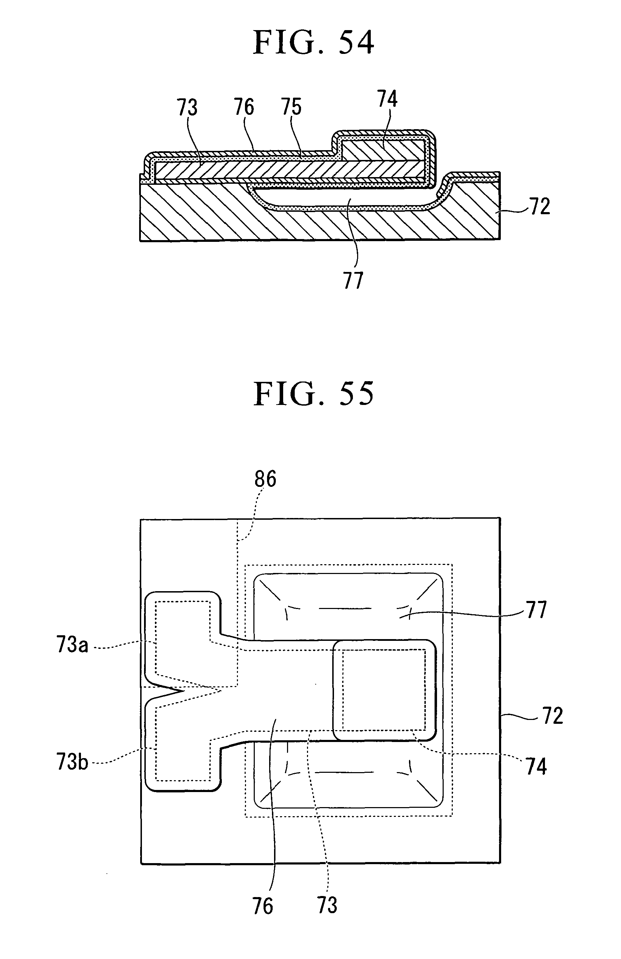

The process for forming the motion sensor 71 will be described. The motion sensor 71 can be formed as follows. FIGS. 34 through 37 are fragmentary cross sectional elevation views illustrating sequential steps involved in a process for forming a motion sensor shown in FIGS. 32 and 33. FIG. 38 is a plan view illustrating the step shown in FIG 37. FIGS. 39 through 41 are fragmentary cross sectional elevation views illustrating sequential steps involved in the process for forming the motion sensor shown in FIGS. 32 and 33, subsequent to the step of FIGS. 37 and 38. FIG. 42 is a plan view illustrating the step shown in FIG. 41. FIGS. 43 through 45 are fragmentary cross sectional elevation views illustrating sequential steps involved in the process for forming the motion sensor shown in FIGS. 32 and 33, subsequent to the step of FIGS. 41 and 42. FIG 46 is a plan view illustrating the step shown in FIG 45. FIGS. 47 and 48 are fragmentary cross sectional elevation views illustrating sequential steps involved in the process for forming the motion sensor shown in FIGS. 32 and 33, subsequent to the step of FIGS. 45 and 46. FIG 49 is a plan view illustrating the step shown in FIG. 48. FIG. 50 is a fragmentary cross sectional elevation view illustrating a sequential step involved in the process for forming the motion sensor shown in FIGS. 32 and 33, subsequent to the step of FIGS. 48 and 49. FIG 51 is a plan view illustrating the step shown in FIG. 50. FIG 52 is a fragmentary cross sectional elevation view illustrating a sequential step involved in the process for forming the motion sensor shown in FIGS. 32 and 33, subsequent to the step of FIGS. 50 and 51. FIG 53 is a plan view illustrating the step shown in FIG 52. FIG. 54 is a fragmentary cross sectional elevation view illustrating a sequential step involved in the process for forming the motion sensor shown in FIGS. 32 and 33, subsequent to the step of FIGS. 52 and 53. FIG 55 is a plan view illustrating the step shown in FIG 54.

As shown in FIG 34, a substrate 72 is prepared. The substrate 72 may be made of a glass ceramic. The substrate 72 is selectively removed so that a recessed portion 77 is formed in the substrate 72. The substrate 72 has the recessed portion 77 and a side frame portion which surrounds the recessed portion 77.

As shown in FIG 35, a first plating seed layer 81 is formed on the surface of the substrate 72. The first plating seed layer 81 covers the top surface of the frame portion and the recessed portion 77 of the substrate 72. A sputtering process can be carried out by sputtering a Cu target to deposit a Cu plating seed layer 81 over the substrate 72. The thickness of the Cu plating seed layer 81 may be, but is not limited to, 3000 angstroms.

It is possible as a modification that an adhesive layer is formed on the surface of the substrate 72 before the first plating seed layer 81 is formed on the adhesive layer. The adhesive layer may be made of, but not limited to, Cr. The thickness of the adhesive layer may be, but is not limited to, 500 angstroms.

As shown in FIG 36, a sacrificial layer 82 is formed on the first plating seed layer 81. The sacrificial layer 82 may be made of Cu. The sacrificial layer 82 may be formed by electrolyte plating process. The thickness of the sacrificial layer 82 may be, but is not limited to, 300 micrometers.

As shown in FIGS. 37 and 38, at least one of grinding and polishing processes may be carried out to selectively remove the sacrificial layer 82 and the first plating seed layer 81 from the substrate 72 so as to leave the sacrificial layer 82 and the first plating seed layer 81 within the recessed portion 77 of the substrate 72. As a result, the top surface of the substrate 72 is exposed.

As shown in FIG 39, a second plating seed layer 83 is formed over the exposed surfaces of the substrate 72, the sacrificial layer 82 and the first plating seed layer 81. In some cases, the second plating seed layer 83 may be made of Ni. The second plating seed layer 83 may be formed by, but not limited to, an Ni-sputtering process. The thickness of the second plating seed layer 83 may be, but is not limited to, 5 micrometers. Typical examples of the material of the second plating seed layer 83 may include, but are not limited to, Ni and Ni-alloys such as NiFe.

As shown in FIG 40, a photo-resist film is applied on the second plating seed layer 83. A photo-lithography process is carried out to form a first photo-resist pattern 84 over the second plating seed layer 83. The first photo-resist pattern 84 has an opening that reaches the second plating seed layer 83.

As shown in FIGS. 41 and 42, a beam 73 is selectively formed within the opening of the first photo-resist pattern 84 and on the second plating seed layer 83, while the first photo-resist pattern 84 is used as a mask. The beam 73 may be plated on the second plating seed layer 83 by using the first photo-resist pattern 84 as a mask. The beam 73 may be formed by electrolyte plating process. The thickness of the beam 73 may be, but is not limited to, 50 micrometers. Typical examples of the material of the beam 73 may include, but are not limited to, Ni and Ni-alloys such as NiFe. The beam 73 has first and second portions. The first portion of the beam 73 extends over the side frame portion of the substrate 72. The second portion of the beam 73 extends over the sacrificial layer 82 in the recessed portion 77 of the substrate 72. The first side portion of the beam 73 has a modified V-shape in plan view as shown in FIG. 42. Namely, the first side portion of the beam 73 has first and second divided portions 73a and 73b.

As shown in FIG 43, the first photo-resist pattern 84 is removed from the beam 73 by using an organic solvent.

As shown in FIG 44, a resist film is applied on the beam 73 and the second plating seed layer 83. A photo-lithography process is carried out to form a second resist pattern 85 on the beam 73 and the second plating seed layer 83. The second resist pattern 85 has an opening which is positioned over a selected area of the second portion of the beam 73. The selected area is adjacent to the second side of the beam 73.

As shown in FIGS. 45 and 46, the second resist pattern 85 is used as a mask to selectively form a weight 74 within the opening of the second resist pattern 85 and on the selected area of the second portion of the beam 73. The weight 74 can be formed by an electrolyte plating method. The thickness of the weight 74 may be, but is not limited to, 50 micrometers. Typical examples of the material of the weight 74 may include, but are not limited to, Ni and Ni-alloys such as NiFe.

As shown in FIG 47, the second resist pattern 85 is removed from the substrate 72 by using an organic solvent.

It is possible as a modification to omit the sequential steps for forming the weight 74 as described with reference to FIGS. 44 to 47.

As shown in FIGS. 48 and 49, the beam 73 and the weight 74 are used as a combined mask to selectively remove the second plating seed layer 83, thereby forming a plating seed layer 78 that extends under the beam 73.

As shown in FIGS. 50 and 51, a wet etching process is carried out for removing the sacrificial layer 82 and the first plating seed layer 81 from the recessed portion 77 of the substrate 72, so that the beam 73 with the plating seed layer 78 and the weight 74 extend over the recessed portion 77. Namely, the beam 73 has the first and second portions. The first portion of the beam 73 is supported by the side frame portion of the substrate 72. The weight 74 and the second portion of the beam 73 are movable in the vertical direction. At least one side of the side frame portion of the substrate 72 is necessary to support the beam 73. Thus, it is possible as a modification to partially cut the substrate 72 so as to leave at least one side of the side frame portion of the substrate 72 for allowing the remaining part of the substrate 72 to support the beam 73. A dicer may be used to cut the substrate 72.

As shown in FIGS. 52 and 53, a mask 86 is formed which selectively covers the first divided portion 73a of the beam 73. A piezoelectric film 75 is selectively formed using the mask 86 so that the piezoelectric film 75 covers at least the beam 73 and the weight 74. The piezoelectric film 75 may be made of polyurea. The piezoelectric film 75 made of polyurea may be formed by a vapor deposition polymerization method. The thickness of the piezoelectric film 75 made of polyurea may be, but is not limited to, 1 micrometer. When the vapor deposition polymerization method is used, the piezoelectric film 75 is formed not only over the beam 73 and the weight 74 but also over the exposed upper surface of the substrate 72.

As shown in FIGS. 54 and 55, an electrode layer 76 is formed on the piezoelectric film 75. The electrode layer 76 may be made of a conductive material such as Al. Typical examples of the material of the electrode layer 76 may include, but are not limited to, Al, Cu, Au, Pt, Ag, and AlSi. The thickness of the electrode layer 76 may be, but is not limited to, 1000 angstroms.

As shown in FIGS. 32 and 33, the mask 86 is removed so that the first divided portion 73 a of the beam 73 is exposed. The remaining portion of the beam 73 other than the first divided portion 73a is covered by the electrode layer 76.

An electric field and a higher temperature may be applied to polarize the piezoelectric film 75. For example, leads 19 may be connected via conductive pastes 20 to the first divided portion 73a of the beam 73 and the electrode layer 76. A voltage of 80V is applied via the leads 19 to the first divided portion 73a of the beam 73 and the electrode layer 76, while heating the piezoelectric film 75 up to 180°C, thereby causing polarization of the piezoelectric film 75.

The piezoelectric film 75 is self-aligned to the beam 73. The electrode layer 76 is also self-aligned to the beam 73. There is almost no probability of causing misalignment of the piezoelectric film 75 and the electrode layer 76 with reference to the beam 73.

No wet process is carried out but the dry processes are carried out after the sacrificial layer 82 and the first plating seed layer 81 have been removed from the recessed portion 77 of the substrate 72 so that the beam 73 with the plating seed layer 78 and the weight 74 extend over the recessed portion 77. No wet process can avoid any deformation of the beam 73. The wet process may cause a flow of liquid to deform the beam 73. The wet process may also cause capillarity which may cause sticking.

The electrode film 76 is greater in width than the piezoelectric film 75. The piezoelectric film 75 is greater in width than the beam 73.

### [Rotational Velocity Sensor]

When an object having a mass M rotationally moves at a velocity V and an angular rate Ω, the Coriolis' force Fc acts on it in the direction perpendicular to the direction of the velocity V. Applying external rotation to Foucault pendulum that is swinging in a plane applies Coriolis' force Fc to the pendulum in the direction perpendicular to the swinging direction, thereby changing the direction of the plane of swing. Coriolis' force Fc is given by Fc = 2MVΩ.

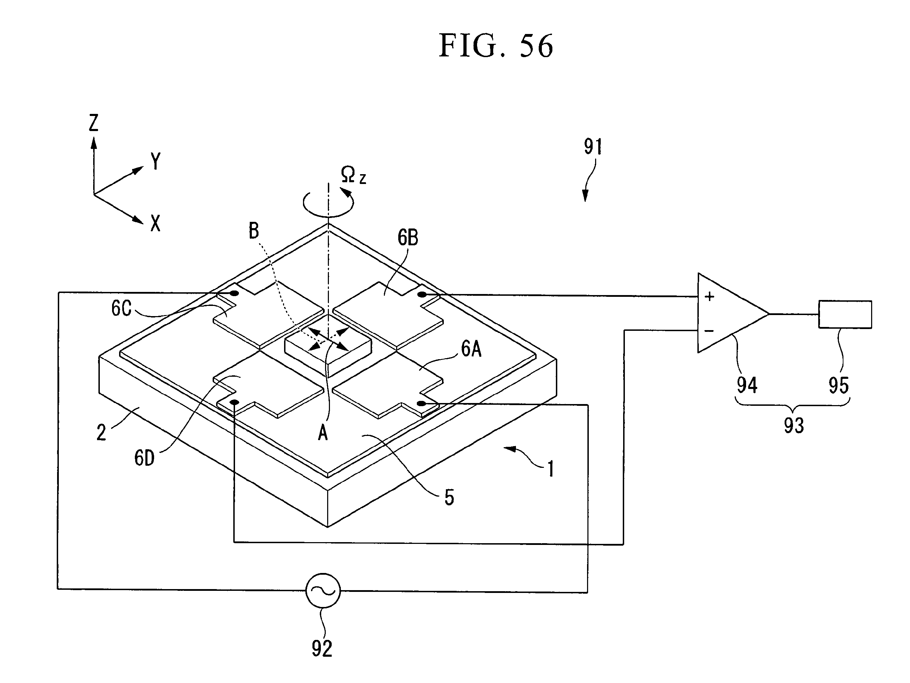

FIG. 56 is a schematic perspective view illustrating a rotational velocity sensor that utilizes Coriolis' force. A rotational velocity sensor 91 may include, but is not limited to, the motion sensor 1 described with reference to FIGS. 1 and 2. The motion sensor 1 has the electrodes 6A, 6B, 6C, and 6D. The rotational velocity sensor 91 may further include an AC power supply 92, and an output detecting unit 93. The output detecting unit 93 may also include, but is not limited to, a differential circuit 94 and a rotational velocity detecting unit 95. The electrodes 6A and 6C are distanced and aligned in the direction of X-axis. The electrodes 6B and 6D are distanced and aligned in the direction of Y-axis. The AC power supply 92 is connected to the electrodes 6A and 6C so as to apply an excitation voltage between the electrodes 6A and 6C. The output detecting unit 93 is connected to the electrodes 6B and 6D. Two inputs of the differential circuit 94 are connected to the electrodes 6B and 6D. The rotational velocity detecting unit 95 is connected to an output of the differential circuit 94. Thus, the rotational velocity detecting unit 95 is connected through the differential circuit 94 to the electrodes 6B and 6D.

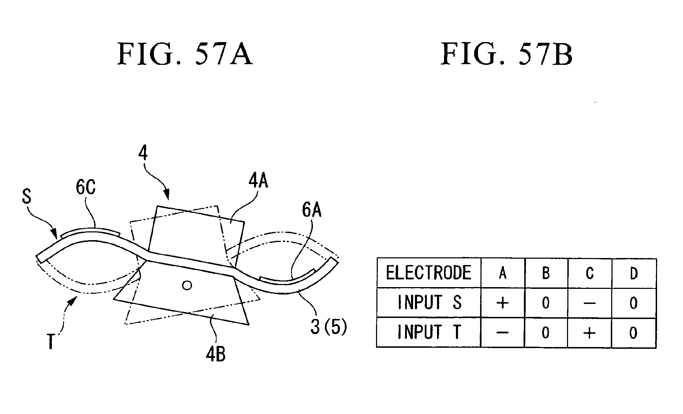

FIG 57A is a cross sectional elevation view illustrating oscillation in the direction of X-axis of a beam with weights when the AC voltage is applied to the electrodes 6A and 6C. FIG 57B is a table showing relationships of electrodes and AC voltage inputs to the electrodes 6A and 6C as shown in FIG 57A.

The piezoelectric film 5 includes the center portion and first to fourth portions. The center portion of the piezoelectric film 5 is positioned under the top weight 4A. The first portion of the piezoelectric film 5 is positioned under the electrode 6A. The second portion of the piezoelectric film 5 is positioned under the electrode 6B. The third portion of the piezoelectric film 5 is positioned under the electrode 6C. The fourth portion of the piezoelectric film 5 is positioned under the electrode 6D.

Input S is applied to the electrodes 6A and 6C. When the plus voltage is applied to the electrode 6A and the minus voltage is applied to the electrode 6C, the first portion of the beam 3 is bent so that the center of the first portion moves downwardly, wherein the first portion of the beam 3 is positioned under the electrode 6A. The third portion of the beam 3 is bent so that the center of the third portion moves upwardly, wherein the third portion of the beam 3 is positioned under the electrode 6C. The second and fourth portions of the beam 3 are not bent. The top weight 4A tilts toward the plus direction of X-axis. The bottom weight 4B tilts toward the minus direction of X-axis. This deformation of the beam 3 and tilting of the weights 4A and 4B are shown by the real line in FIG 57A.

Input T is applied to the electrodes 6A and 6C. When the minus voltage is applied to the electrode 6A and the plus voltage is applied to the electrode 6C, the first portion of the beam 3 is bent so that the center of the first portion moves upwardly. The third portion of the beam 3 is bent so that the center of the third portion moves downwardly. The second and fourth portions of the beam 3 are not bent. The top weight 4A tilts toward the minus direction of X-axis. The bottom weight 4B tilts toward the plus direction of X-axis. This deformation of the beam 3 and tilting of the weights 4A and 4B are shown by the broken line in FIG. 57A.

Applying AC voltage to the electrodes 6A and 6C causes swings or oscillation of the weights 4A and 4B in the direction of X-axis as shown by an arrow mark "A" and the alternating deformation of the beam 3. A rotational force or angular force around the Z-axis is applied to the rotational velocity sensor 91, thereby causing rotation of the rotational velocity sensor 91 around the Z-axis at a rotational rate Ωz. When the rotational force or angular force around the Z-axis is applied to the rotational velocity sensor 91 while the AC voltage is applied to the electrodes 6A and 6C, the Coriolis' force is applied to the rotational velocity sensor 91, thereby causing another oscillation of the weights 4A and 4B in the direction of Y-axis as shown by an arrow mark "B". The applied Coriolis' force is given by Fc = 2MVΩ. The oscillation of the weights 4A and 4B in the direction of Y-axis as shown by an arrow mark "B" causes alternating deformation of the second and fourth portions of the beam 3 and the piezoelectric film 5. The alternating deformation of the piezoelectric film 5 generates alternating voltages that appear at the electrodes 6B and 6D. The generated alternating voltages can be detected by the output detecting unit 93. The Coriolis' force that is applied to the rotational velocity sensor 91 can be detected by detecting the generated alternating voltages put by the output detecting unit 93. The rotational rate or angular rate can be detected by measuring the Coriolis' force that is applied to the rotational velocity sensor 91.

It is possible as a modification that the AC power supply 92 is connected to the electrodes 6B and 6D and the output detecting unit 93 is connected to the electrodes 6A and 6C. In this case, the Coriolis' force that is applied to the rotational velocity sensor 91 can be detected by detecting the generated alternating voltages put by the output detecting unit 93. The rotational rate or angular rate can be detected by measuring the Coriolis' force that is applied to the rotational velocity sensor 91.

### [Two-Directions Inclination Sensor]

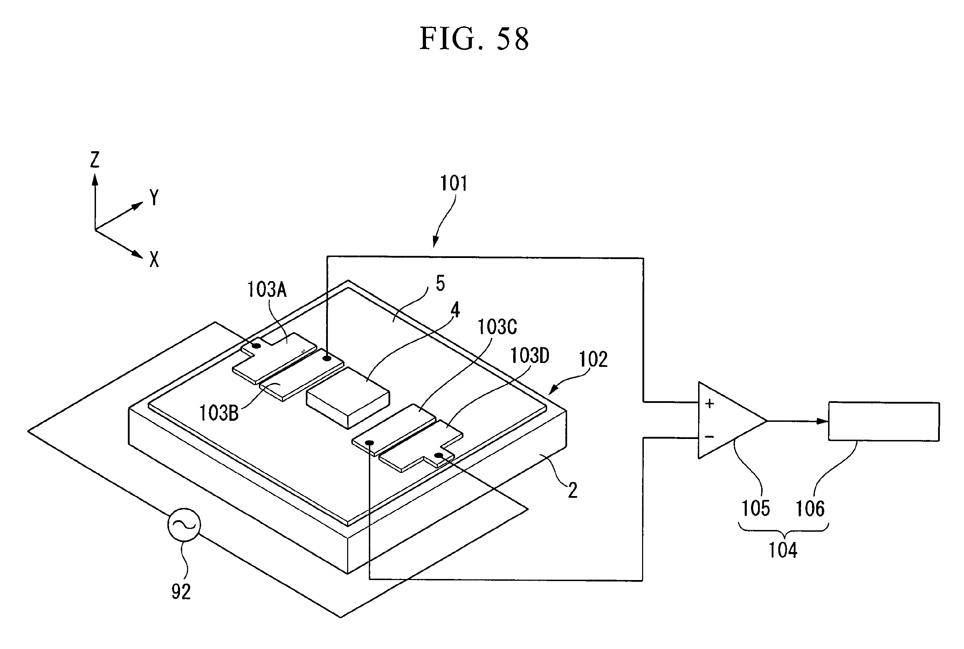

FIG. 58 is a schematic perspective view illustrating a two-directions inclination sensor utilizing a motion sensor. A two-directions inclination sensor 101 may include, but is not limited to, a motion sensor 102 that is modified from the motion sensor 1 described with reference to FIGS. 1 and 2. The motion sensor 102 has electrodes 103A, 103B, 103C, and 103D which are aligned in the direction of X-axis. The electrodes 103A, 103B, 103C, and 103D and the weight 4 are aligned in the direction of X-axis. For example, the electrodes 103A, 103B are provided in the first side of the weight 4, and the electrodes 103C, 103D are provided in the second side of the weight 4, wherein the first and second sides are opposite to each other. The electrode 103B is disposed between the electrode 103A and the weight 4. The weight 4 is disposed between the electrodes 103B and 103C. The electrode 103C is disposed between the weight 4 and the electrode 103D.

The two-directions inclination sensor 101 may further include an AC power supply 92, and an output detecting unit 104. The output detecting unit 104 may also include, but is not limited to, a differential circuit 105 and an inclination detecting unit 106. The AC power supply 92 is connected to the electrodes 103A and 103D so as to apply an excitation voltage between the electrodes 103A and 103D. The output detecting unit 104 is connected to the electrodes 103B and 103C. Two inputs of the differential circuit 105 are connected to the electrodes 103B and 103C. The inclination detecting unit 106 is connected to the output of the differential circuit 105. Thus, the inclination detecting unit 106 is connected through the differential circuit 105 to the electrodes 103B and 103C.

Applying the AC voltage to the electrodes 103A and 103D can cause oscillation or swing of the top and bottom weights 4A and 4B in the direction of X-axis. The oscillation or swing depends upon both the rotational inertia of the weight 4 that is composed of the top and bottom weights 4A and 4B and the elasticity of the beam 3 to which the weight 4 is attached.

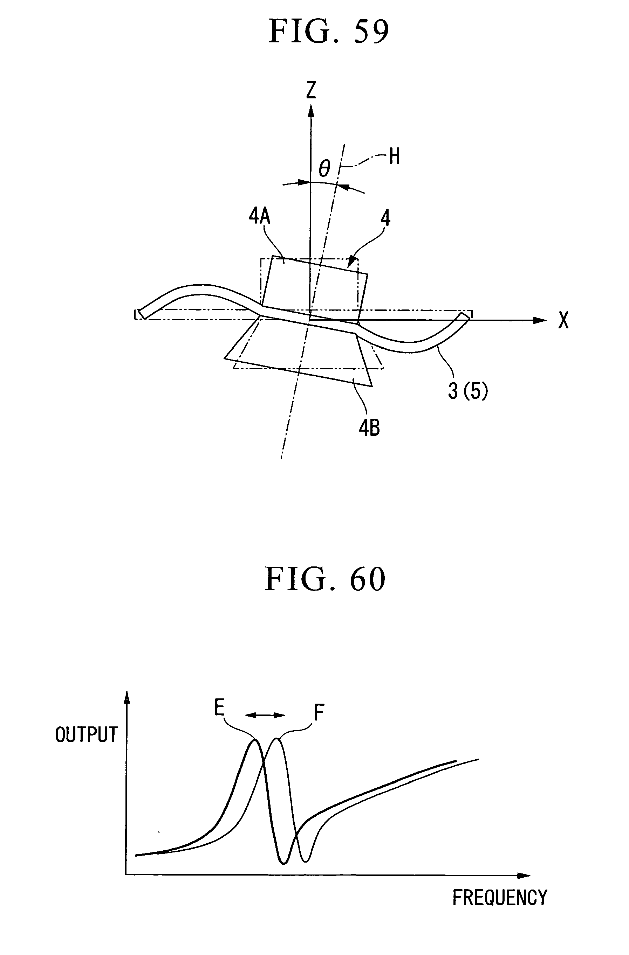

FIG 59 is a cross sectional elevation view illustrating oscillation or swing in the direction of X-axis of the weights when the AC voltage is applied to the electrodes 103A and 103D. FIG. 60 is a diagram illustrating resonant frequency characteristics of the two-directions inclination sensor 101 of FIG. 58.

When the substrate 2 is given tilted toward the plus direction of X-axis, then an axis H on the oscillation center tilts by θ toward the plus direction of X-axis from the Z-axis as shown in FIG 59, thereby applying a bias stress to the beam 3, the piezoelectric film 5 and the electrodes 103A and 103D. The application of the bias stress changes the elasticity of the beam 3, the piezoelectric film 5 and the electrodes 103A and 103D, thereby changing the resonant frequency from E to F as shown in FIG 60. The change of the resonant frequency depends upon the tilt angle θ of the axis H toward the plus direction of X-axis from the Z-axis. The change of the resonant frequency can be detected by detecting the differential output from the electrodes 103B and 103C. Namely, the tilt angle θ of the axis H toward the plus direction of X-axis from the Z-axis can be detected by detecting the differential output from the electrodes 103B and 103C. Namely, the two-directions inclination sensor 101 is configured to detect inclination in the direction of X-axis.

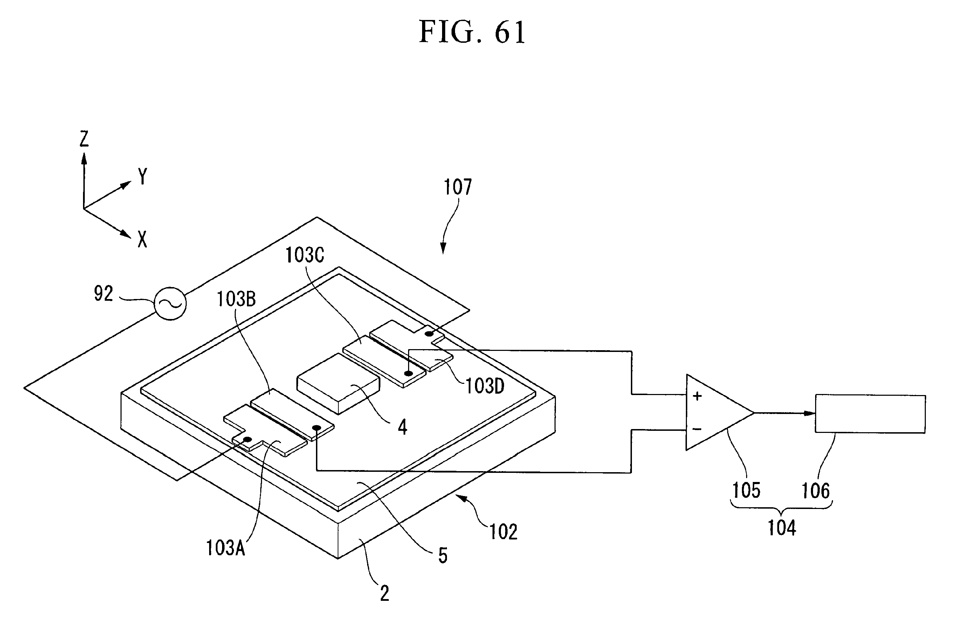

FIG 61 is a schematic perspective view illustrating another two-directions inclination sensor utilizing a motion sensor. A two-directions inclination sensor 107 may include, but is not limited to, a motion sensor 102 that is modified from the motion sensor 1 described with reference to FIGS. 1 and 2. The motion sensor 102 has electrodes 103A, 103B, 103C, and 103D which are aligned in the direction of Y-axis. The electrodes 103A, 103B, 103C, and 103D and the weight 4 are aligned in the direction of Y axis. For example, the electrodes 103A, 103B are provided in the first side of the weight 4, and the electrodes 103C, 103D are provided in the second side of the weight 4, wherein the first and second sides are opposite to each other. The electrode 103B is disposed between the electrode 103A and the weight 4. The weight 4 is disposed between the electrodes 103B and 103C. The electrode 103C is disposed between the weight 4 and the electrode 103D.

The two-directions inclination sensor 107 may further include an AC power supply 92, and an output detecting unit 104. The output detecting unit 104 may also include, but is not limited to, a differential circuit 105 and an inclination detecting unit 106. The AC power supply 92 is connected to the electrodes 103A and 103D so as to apply an excitation voltage between the electrodes 103A and 103D. The output detecting unit 104 is connected to the electrodes 103B and 103C. Two inputs of the differential circuit 105 are connected to the electrodes 103B and 103C. The inclination detecting unit 106 is connected to the output of the differential circuit 105. Thus, the inclination detecting unit 106 is connected through the differential circuit 105 to the electrodes 103B and 103C.

Applying the AC voltage to the electrodes 103A and 103D can cause oscillation or swing of the top and bottom weights 4A and 4B in the direction of Y-axis. The oscillation or swing depends upon both the rotational inertia of the weight 4 that is composed of the top and bottom weights 4A and 4B and the elasticity of the beam 3 to which the weight 4 is attached.

When the substrate 2 is given tilted toward the plus direction of Y-axis, then an axis H on the oscillation center tilts toward the plus direction of Y-axis from the Z-axis, thereby applying a bias stress to the beam 3, the piezoelectric film 5 and the electrodes 103A and 103D. The application of the bias stress changes the elasticity of the beam 3, the piezoelectric film 5 and the electrodes 103A and 103D, thereby changing the resonant frequency. The change of the resonant frequency depends upon the tilt angle of the axis H toward the plus direction of Y-axis from the Z-axis. The change of the resonant frequency can be detected by detecting the differential output from the electrodes 103B and 103C. Namely, the tilt angle of the axis H toward the plus direction of Y-axis from the Z-axis can be detected by detecting the differential output from the electrodes 103B and 103C. Namely, the two-directions inclination sensor 101 is configured to detect inclination in the direction of Y axis.

### [Pressure Sensor]

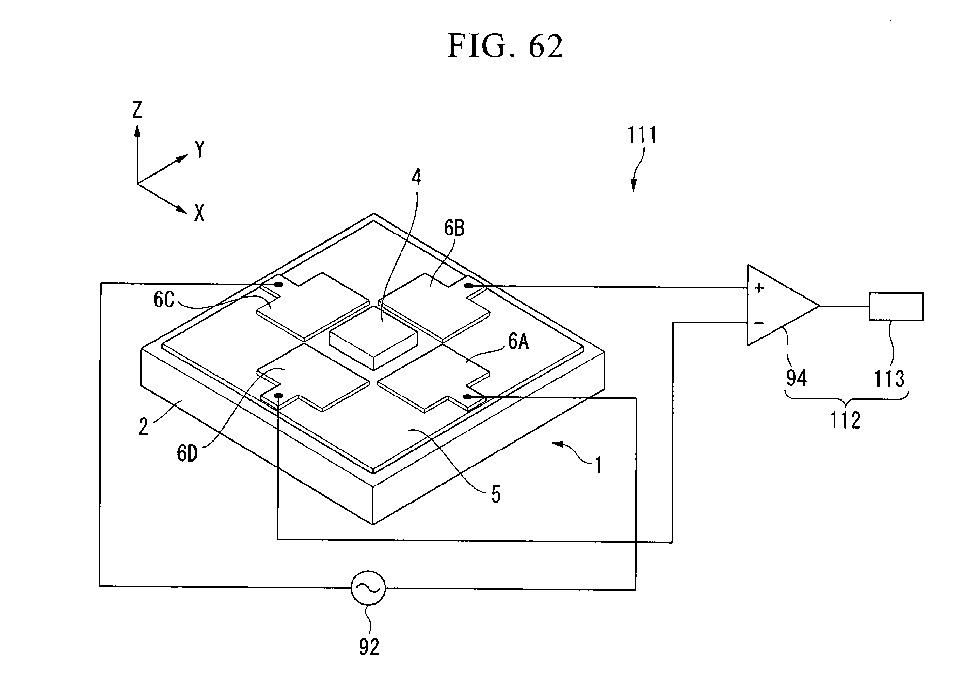

FIG 62 is a schematic perspective view illustrating a pressure sensor that includes the motion sensor. A pressure sensor 111 has the same configuration as the rotational velocity sensor 91 as described with reference to FIG. 56, except for the output detecting unit. The pressure sensor 111 may include, but is not limited to, the motion sensor 1 described with reference to FIGS. 1 and 2. The motion sensor 1 has the electrodes 6A, 6B, 6C, and 6D. The pressure sensor 111 may further include an AC power supply 92, and an output detecting unit 112. The output detecting unit 112 may also include, but is not limited to, a differential circuit 94 and a pressure detecting unit 113. The electrodes 6A and 6C are distanced and aligned in the direction of X-axis. The electrodes 6B and 6D are distanced and aligned in the direction of Y-axis. The AC power supply 92 is connected to the electrodes 6A and 6C so as to apply an excitation voltage between the electrodes 6A and 6C. The output detecting unit 112 is connected to the electrodes 6B and 6D. Two inputs of the differential circuit 94 are connected to the electrodes 6B and 6D. The pressure detecting unit 113 is connected to an output of the differential circuit 94. Thus, the pressure detecting unit 113 is connected through the differential circuit 94 to the electrodes 6B and 6D.

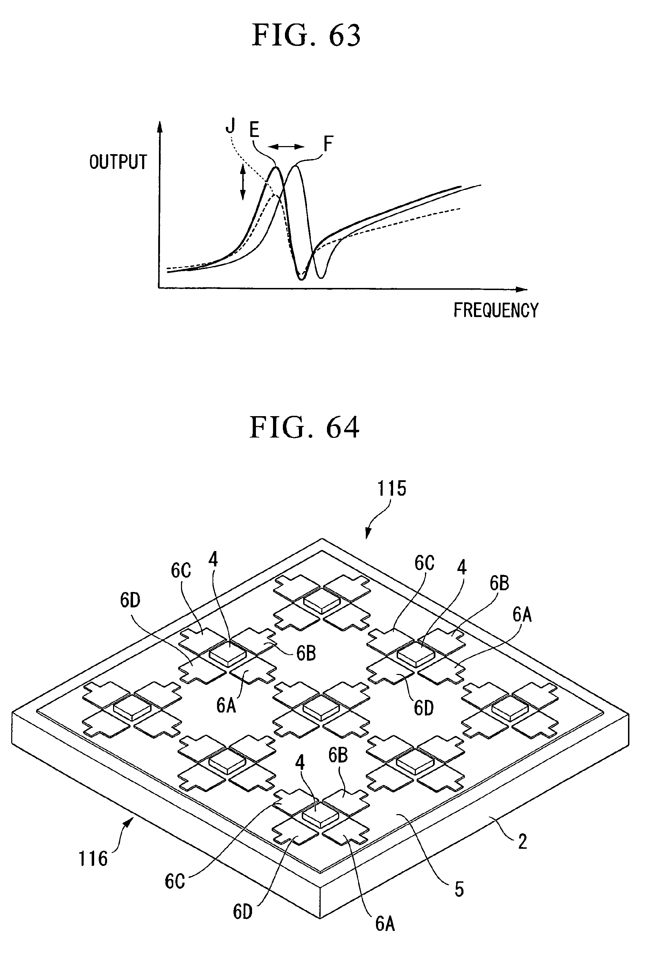

FIG. 63 is a diagram illustrating resonant frequency characteristics of the pressure sensor 111 of FIG. 62.

When the AC power supply 92 applies an AC voltage between the electrodes 6A and 6C, the beam 3 with the weight 4 is oscillated where the pressure sensor 111 has resonant characteristic E represented by the real line in FIG 63. While the beam 3 with the weight 4 is oscillated, touching the weight 4 may reduce the resonant current E to a resonant current J and also may change the resonant frequency E to a resonant frequency F. The changes of the resonant frequency and the resonant currents depend upon the pressure applied to the weight, namely depend upon the direction and magnitude of the applied pressure. The changes of the resonant frequency and the resonant currents can be detected by detecting the differential output from the electrodes 103B and 103D. Namely, the direction and magnitude of the pressure applied to the weight can be detected by detecting the differential output from the electrodes 103B and 103D.

FIG. 64 is a schematic perspective view illustrating another pressure sensor that includes an array of motion sensors. A pressure sensor 115 includes an array of motion sensors 116. Each motion sensor has substantially the same configuration as that of the motion sensor 1 described above. The pressure sensor 115 may include, but is not limited to, the substrate 2, the piezoelectric film 5 over the substrate 2, and an array of units over the piezoelectric film 5. Each unit may include the weight 4, and the electrodes 6A, 6B, 6C, and 6D. Each unit is also connected to the AC power supply and the output detecting unit as described above, but illustrations are omitted in FIG 64. The pressure sensor 115 can detect not only the direction and magnitude of the pressure applied to the weight 4 but also pressure distribution over the pressure sensor 115.

### [Tactile Controller]

In accordance with the pressure sensors 111 and 115 shown in FIGS. 62 and 64, toughing the oscillating weight 4 may provide a tactility that is different from that when toughing the unoscillated weight. The tactility or feeling to touch the oscillating weight 4 may depend on the oscillation frequency and the intensity of an input voltage. The tactility or feeling to touch the oscillating weight 4 can be changed by changing the oscillation frequency and the intensity of the input AC voltage.

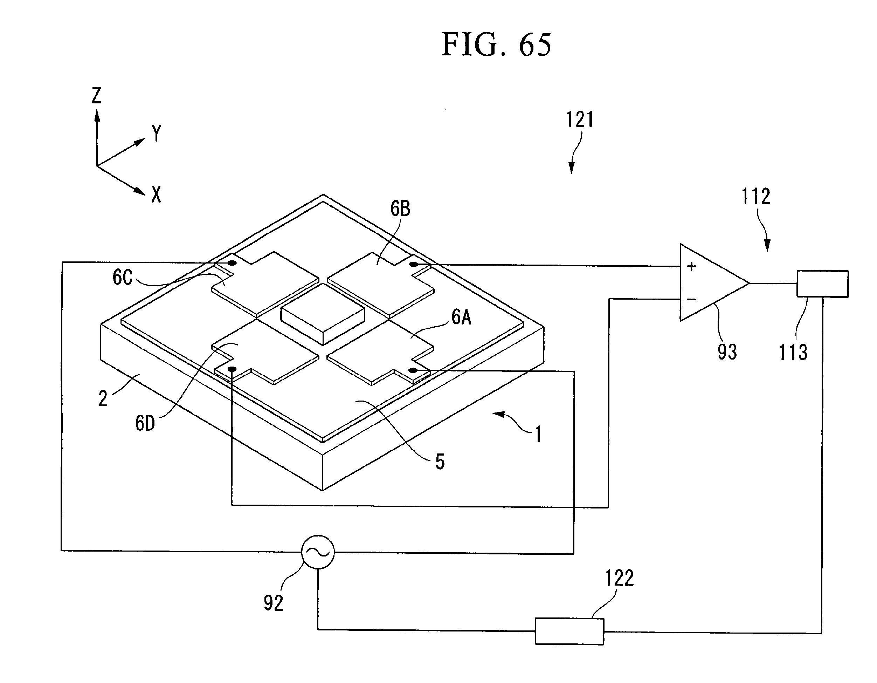

FIG. 65 is a schematic perspective view illustrating a tactile controller. A tactile controller 121 has the same configuration as the pressure sensor 111, except for a control unit 112 as an additional element. The tactile controller 121 may include, but is not limited to, the motion sensor 1 described with reference to FIGS. 1 and 2. The motion sensor 1 has the electrodes 6A, 6B, 6C, and 6D. The tactile controller 121 may further include an AC power supply 92, an output detecting unit 112, and the control unit 122. The output detecting unit 112 may also include, but is not limited to, a differential circuit 93 and a pressure detecting unit 113. The electrodes 6A and 6C are distanced and aligned in the direction of X-axis. The electrodes 6B and 6D are distanced and aligned in the direction of Y-axis. The AC power supply 92 is connected to the electrodes 6A and 6C so as to apply an excitation voltage between the electrodes 6A and 6C. The output detecting unit 112 is connected to the electrodes 6B and 6D. Two inputs of the differential circuit 94 are connected to the electrodes 6B and 6D. The pressure detecting unit 113 is connected to an output of the differential circuit 94. Thus, the pressure detecting unit 113 is connected through the differential circuit 94 to the electrodes 6B and 6D.

The control unit 122 is connected between the AC power supply 92 and the pressure detecting unit 113. The control unit 122 receives the detected pressure signal from the pressure detecting unit 113. The control unit 122 generates a control signal based on the detected pressure signal. The control unit 122 supplies the control signal to the AC power supply 92 so as to control the AC voltage input to the electrodes 6A and 6C. The control unit 122 is configured to control the oscillation frequency and the intensity of the input AC voltage, based on the detected pressure signal from the pressure detecting unit 113. Controlling the oscillation frequency and the intensity of the input AC voltage can control the tactility or feeling to touch the oscillating weight 4.

It is possible as a modification that the tactile controller 121 includes an array of motion sensors 116 as shown in FIG 64. Each motion sensor has substantially the same configuration as that of the motion sensor 1 described above. The tactile controller 121 may include, but is not limited to, the substrate 2, the piezoelectric film 5 over the substrate 2, and an array of units over the piezoelectric film 5. Each unit may include the weight 4, and the electrodes 6A, 6B, 6C, and 6D as shown in FIG. 65. Each unit is also connected to the AC power supply and the output detecting unit as shown in FIG. 65. Two-dimensional tactile controller can be realized. The two-dimensional tactile controller may be applicable to a braille display.

It is also possible as a further modification combine two oscillation components in the directions along X-axis and Y-axis so as to elliptically oscillate the weight 4. Toughing the elliptically oscillated weight 4 provides different tactility or feeling to touch.

### Modifications:

The motion sensor, the accelerometer, the inclination sensor, the pressure sensor, and the tactile controller should not be limited to what are described above as embodiments.

The substrate may be made of an insulator, a conductor or a semiconductor. Typical examples of the insulator for the substrate may include, but are not limited to, a borosilicate glass, a crystal glass, a quartz, alumina, silicon nitride (SiN), a glass ceramic, zirconia, crystal, and sapphire. Typical examples of the conductor for the substrate may include, but are not limited to, metals and alloys. Typical examples of the semiconductor for the substrate may include, but are not limited to, silicon (Si) and silicon carbide (SiC).

As described above, the piezoelectric film may be made of an organic material. Examples of the organic material for the piezoelectric film may include, but are not limited to, polyurea, piezopolymers such as polyvinylidene difluoride (PVDF), and piezoceramics such as AlN and ZnO. The organic piezoelectric film may include at least any one of polyvinylidene difluoride (PVDF), copolymer of P(VDF/TrFE)=VDF (vinylidene fluoride) and TrFE (trifluoro ethylene), copolymer of P(VDF/TeFE)=VDF (vinylidene fluoride) and TeFE (terrafluoroethylene), and alternating copolymer of P(VDCN/VAc)=VDCN(vinylidene cyanide) and VAc(vinyl acetate).

The motion sensor as described above is suitable to reduce the size thereof, to reduce the manufacturing cost thereof, and to improve the shock resistance thereof. The motion sensor as described above is useful to detect the attitude and motion of an object such as a vehicle, a musical instrument, a cellular phone, a gaming machine, and a remote controller.

As used herein, the following directional terms "forward, rearward, above, downward, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially," "about," and "approximately" as used herein mean a reasonable amount of deviation of the modified term such that the end result is not significantly changed. For example, these terms can be construed as including a deviation of at least ± 5 percents of the modified term if this deviation would not negate the meaning of the word it modifies.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A motion sensor comprising:
a substrate;
a beam being supported by the substrate, the beam being elastically deformable;
a weight attached to the beam;
a piezoelectric film following and extending along at least a part of the beam, the piezoelectric film comprising an organic piezoelectric film; and
a first electrode on the piezoelectric film.

2. The motion sensor according to claim 1, further comprising:
an insulating film over the beam; and
a second electrode over the insulating film, the second electrode being eclectically separated by the insulating film from the beam, the second electrode being under the piezoelectric film,
wherein the piezoelectric film is interposed between the first and second electrodes.

3. The motion sensor according to claim 1, wherein the beam is made of a conductive material, and the beam performs as a second electrode so that the piezoelectric film is interposed between the first and second electrodes.

4. The motion sensor according to claim 1, wherein the organic piezoelectric film comprises polyurea.

5. The motion sensor according to claim 1, wherein the beam is supported at one side thereof by the substrate.

6. The motion sensor according to claim 1, wherein the beam is supported at both sides thereof by the substrate.

7. The motion sensor according to claim 6, wherein the weight is attached to the center area of the beam, and the first electrode comprises a plurality of electrode patterns which are disposed around the weight.

8. An accelerometer comprising:
a motion sensor comprising:
a substrate;
a beam being supported at both sides thereof by the substrate, the beam being elastically deformable;
a weight attached to the center area of the beam;
a piezoelectric film following and extending along at least a part of the beam, the piezoelectric film comprising an organic piezoelectric film; and
a first electrode on the piezoelectric film, the first electrode comprises a plurality of electrode patterns which are disposed around the weight; and
an output detecting unit that is connected to at least two of the electrode patterns, the output detecting unit detecting the outputs from the at least two of the electrode patterns, and the output detecting unit comprising an acceleration detecting unit that detects acceleration based on the outputs that appear at the at least two of the electrode patterns when an acceleration is applied to the weight.

9. An inclination sensor comprising:
a motion sensor comprising:
a substrate;
a beam being supported at both sides thereof by the substrate, the beam being elastically deformable;
a weight attached to the center area of the beam;
a piezoelectric film following and extending along at least a part of the beam, the piezoelectric film comprising an organic piezoelectric film; and
a first electrode on the piezoelectric film, the first electrode comprises a plurality of electrode patterns which are disposed around the weight;
an excitation voltage applying unit that is connected to at least two of the electrode patterns, the excitation voltage applying unit that applies an excitation voltage to the at least two of the electrode patterns; and
an output detecting unit that is connected to other electrode patterns, the output detecting unit detecting the outputs from the other electrode patterns, and the output detecting unit comprising an inclination detecting unit that detects a tilt angle of the inclination sensor based on the change of a resonant frequency, the change of the resonant frequency being caused by an inclination of the weight.

10. A pressure sensor comprising:
a motion sensor comprising:
a substrate;
a beam being supported at both sides thereof by the substrate, the beam being elastically deformable;
a weight attached to the center area of the beam;
a piezoelectric film following and extending along at least a part of the beam, the piezoelectric film comprising an organic piezoelectric film; and
a first electrode on the piezoelectric film, the first electrode comprises a plurality of electrode patterns which are disposed around the weight;
an excitation voltage applying unit that is connected to at least two of the electrode patterns, the excitation voltage applying unit that applies an excitation voltage to the at least two of the electrode patterns; and
an output detecting unit that is connected to other electrode patterns, the output detecting unit detecting the outputs from the other electrode patterns, and the output detecting unit comprising a pressure detecting unit that detects an external pressure that is applied to the inclination sensor based on the change of a resonant frequency, the change of the resonant frequency being caused by applying an external pressure to the weight.

11. A tactile controller comprising:
a motion sensor comprising:
a substrate;
a beam being supported at both sides thereof by the substrate, the beam being elastically deformable;
a weight attached to the center area of the beam;
a piezoelectric film following and extending along at least a part of the beam, the piezoelectric film comprising an organic piezoelectric film; and
a first electrode on the piezoelectric film, the first electrode comprises a plurality of electrode patterns which are disposed around the weight;
an excitation voltage applying unit that is connected to at least two of the electrode patterns, the excitation voltage applying unit that applies an excitation voltage to the at least two of the electrode patterns;
an output detecting unit that is connected to other electrode patterns, the output detecting unit detecting the outputs from the other electrode patterns; and
a tactile control unit being connected between the excitation voltage applying unit and the output detecting unit, the tactile control unit that controls the excitation voltage based on the change of the resonant frequency being caused upon touching the weight.
